# EUROPEAN PATENT APPLICATION

(11) **EP 2 498 328 A1**
(43) Date of publication of application: **12.09.2012**
(21) Application number: 10828084.3
(22) Date of filing: 01.11.2010
(51) Int. Cl.: H01M 8/04

(54) **FUEL CELL SYSTEM**

(30) Priority: 04.11.2009 JP 2009252611
(71) Applicant: Panasonic Corporation, Kadoma-shi Osaka 571-8501 (JP)
(72) Inventor: TATSUI, Hiroshi, Chuo-ku, Osaka-shi, Osaka 540-6207 (JP); TAGUCHI, Kiyoshi, Chuo-ku, Osaka-shi, Osaka 540-6207 (JP)
(74) Representative: Schwabe - Sandmair - Marx
(86) International application number: PCT/JP2010/006435
(87) International publication number: WO 2011/055523

(57) **Abstract**

A fuel cell system of the present invention comprises a fuel cell (1), a fuel processor; a burner (2a) configured to combust at least one of off-gas containing hydrogen which has not been consumed in power generation in the fuel cell (1), the material gas, and the fuel gas, a first gas passage connecting the fuel processor to the fuel cell (1); a second gas passage connecting the fuel cell (1) to the burner (2a); a third gas passage connecting the first gas passage to the second gas passage such that the fuel cell (1) is bypassed; a passage switching means configured to switch a destination of gas flowing through the first gas passage to at least one of the fuel cell (1) and the third gas passage; and a controller (101) configured to control the passage switching means such that the fuel gas is supplied to the first gas passage discontinuously and the fuel gas is supplied to the third gas passage discontinuously or continuously, when supplying of the fuel gas to the fuel cell (1) starts.

## Description

### Technical Field

The present invention relates to a fuel cell system which supplies fuel gas generated by reforming a hydrocarbon-based raw material to a fuel cell and generates electric power.

### Background Art

A fuel cell performs power generation through an electrochemical reaction, using hydrogen or hydrogen-rich gas supplied to one of electrodes sandwiching electrolyte, and oxidizing gas such as humid air containing oxygen supplied to the other electrode. The fuel cell generates heat as well as electric power in power generation. In recent years, attention has been paid to a cogeneration system which recovers this heat and utilize it as heat energy, together with the electric power generated in the fuel cell.

In one method of generating the hydrogen-rich gas (hereinafter referred to as fuel gas) required for power generation in the fuel cell, a household (home) fuel cell system installed in a place where there is no hydrogen infrastructure, often uses a method in which a reformer which is filled with reforming catalyst and has a temperature of about 700 degrees C performs steam reforming of steam and a hydrocarbon-based material gas such as a city gas (natural gas) or LPG, to generate fuel gas containing hydrogen as major component.

In the steam reforming, carbon monoxide is generated as a by-product, and the fuel gas exhausted from the reformer contains carbon monoxide of about 10 ~ 15%. This carbon monoxide poisons electrocatalyst in the fuel cell and decreases power generation ability. Therefore, it is necessary to remove the carbon monoxide from the fuel gas to a concentration of 100ppm or lower, preferably 10ppm or lower.

To this end, typically, a shift converter and a selective oxidizer are disposed in this order on a downstream side of the reformer. The shift converter is filled with shift catalyst which causes an aqueous gas shift reaction between carbon monoxide in the fuel gas exhausted from the reformer and the steam to proceed to generate hydrogen and carbon dioxide. The selective oxidizer is supplied with the fuel gas with carbon monoxide concentration having been decreased by the shift converter and air, and is filled with selective oxidization catalyst which causes a selective oxidization reaction between carbon monoxide and oxygen in the air to proceed to decrease the carbon monoxide concentration in the fuel gas to 10ppm or lower. The shift converter performs an aqueous gas shift reaction at 200 degrees C or higher, while the selective oxidizer performs a selective oxidization reaction at about 100 degrees C.

A hydrogen generator including the reformer, the shift converter and the selective oxidizer, which are coupled together in this order as described above, will be called a fuel processor hereinafter, according to situations.

The aqueous gas shift reaction and the selective oxidization reaction are exothermic reactions, while the steam reforming reaction is an endothermic reaction. The fuel processor is provided with a burner for increasing the temperature of the reforming catalyst up to about 700 degrees C which is required for the reaction.

During power generation of the fuel cell system, the material gas and the steam are supplied to the fuel processor and the fuel gas generated in the fuel processor is supplied to the fuel cell, which generates electric power. Each of the fuel gas and the air supplied to the fuel processor has a high humidity. This is because, a fluorinated-resin ion exchange membrane is typically used as electrolyte of a cell in a polymer electrolyte fuel cell, and hydrogen ion conductivity of the polymer electrolyte decreases if the water content of the electrolyte membrane decreases, etc., thereby causing power generation capability of the fuel cell to decrease. During power generation in the fuel cell, hydrogen and oxygen electrochemically reach with each other to generate water in the fuel cell. Fuel gas (hereinafter also referred to as off-gas) which has not been consumed in the power generation in the fuel cell is supplied to the burner, which combusts hydrogen in the off-gas, thereby allowing the reforming catalyst to be maintained at a temperature of about 700 degrees C.

In the conventional fuel cell system, just after the start of the power generation operation, the fuel processor supplies the fuel gas containing carbon monoxide with a high concentration to the fuel cell. The reason is that at the start of the power generation, the temperature at which the fuel processor operates has not reached a predetermined temperature yet, and thereby carbon monoxide in the fuel gas has not been sufficiently removed. If the fuel gas containing carbon monoxide with a high concentration is supplied to, for example, the polymer electrolyte fuel cell, the supplied carbon monoxide could poison catalyst of an anode in the polymer electrolyte fuel cell. This poisoning of the catalyst of the anode significantly impedes proceeding of the electrochemical reaction in the fuel cell. For this reason, the conventional fuel cell system has a drawback that the power generation capability degrades with an increase in the number of times of shut-down and start of the power generation operation.

Accordingly, to provide a fuel cell system which is easily installed at home or into electric automobiles and makes progress of poisoning of the catalyst difficult, there is proposed a fuel cell system in which supplying of the fuel gas to the fuel cell is stopped just after the start of the power generation operation, and a raw material of the fuel gas is fed to the interior of the fuel cell to keep a pressure therein after shut-down of power generation operation (see e.g., Patent Literature 1).

Fig. 13 is a schematic view showing a configuration of the fuel cell system disclosed in Patent Literature 1.

As shown in Fig. 13, the fuel cell system disclosed in Patent Literature 1 includes a reformer 500, a first gas passage 502 connecting the reformer 500 to a fuel cell 501, and a second gas passage 503 connecting the fuel cell 501 to a combustor 500a of the reformer 500. The reformer 500 generates hydrogen-rich fuel gas from a raw material containing as a major component a compound including carbon and hydrogen. The fuel gas is supplied from the reformer 500 to the fuel cell 501 via the first gas passage 502. A fuel gas (hereinafter referred to as off-gas) which has not been consumed in the power generation in the fuel cell 501 and has been exhausted from the fuel cell 501 is supplied to the combustor 500a of the reformer 500 via the second gas passage 503.

To switch a supply destination of the fuel gas from the fuel cell 501 to the combustor 500a in the reformer 500, a third gas passage 504 is provided between the first gas passage 502 and the second gas passage 503. Further, a material gas supplier 505 is provided to supply a raw material used for generating the fuel gas to the reformer 500. A reformed gas shut-off valve 507 is provided on the first gas passage 502. An anode off-gas shut-off valve 508 is provided in a location upstream of a joint point where the second gas passage 503 is joined to the third gas passage 504. A bypass shut-off valve 509 is provided on the third gas passage 504. A blower 510 is provided to supply air as oxidizing gas to the fuel cell 501.

In the fuel cell system disclosed in Patent Literature 1, during initial stage of a start-up operation, the fuel gas generated in the reformer 500 and having a higher carbon monoxide concentration than the fuel gas generated in the reformer 500 during the power generation operation is supplied to the combustor 500a of the reformer 500 via the third gas passage 504. That is, in the initial stage of the start-up operation of the reformer 500, the reformed gas shut-off valve 507 and the anode off-gas shut-off valve 508 are closed and the bypass shut-off valve 509 is opened. The fuel gas is combusted in the combustor 500a to heat the catalyst to increase a temperature of the catalyst.

When the start-up operation progresses and the temperature of the catalyst in the reformer 500 reaches a predetermined temperature, the reformed gas shut-off valve 507 and the anode off-gas shut-off valve 508 are switched from the closed state to an open state, so that the fuel gas generated in the reformer 500 starts to be supplied to the fuel cell 501 via the first gas passage 502, and the power generation operation starts. At this time, the bypass shut-off valve 509 is controlled to be opened and closed intermittently plural times and then closed. Thereby, the material gas which was sealed in the vicinity of the fuel cell 501 and was not reformed is mixed with the reformed gas and diluted, and the diluted mixture gas is supplied to the combustor 500a. This can suppress an air-fuel ratio in the combustor from getting deviated from a proper one and a combustion state from becoming unstable. Then, the fuel gas is used as a fuel for power generation in the fuel cell 501. The off-gas which is exhausted from the fuel cell 501 is supplied to the combustor 500a in the reformer 500 via the second gas passage 503 and combusted in the combustor 500a to heat a catalyst in the fuel processor.

In the fuel cell system disclosed in Patent Literature 1, during a shut-down state of the fuel cell system, the steam within the fuel cell 501 is condensed into water, causing a negative pressure to be generated within the fuel cell 501. Under the negative pressure condition, air flows back into the anode and oxidizes the electrode of the anode catalyst, or components within a stack are destroyed physically. To solve this problem, the material gas is supplied to the fuel cell 501. At this time, the anode off-gas shunt-off valve 508 is closed. This is because, if the anode off-gas shut-off valve 508 is open, the material gas passes through the inside of the fuel cell 501 and is supplied to the combustor 500a in the reformer 500, where the material gas is used for combustion unnecessarily and wastefully. Therefore, with the anode off-gas shut-off valve 508 being closed, the material gas is supplied to the fuel cell 501.

As described above, in accordance with the fuel cell system disclosed in Patent Literature 1, just after the start of the start-up operation, the fuel gas containing carbon monoxide with a high concentration is not supplied to the fuel cell 501, but after the temperature of the catalyst in the reformer 500 reaches the predetermined temperature and the reformer 500 is able to generate the fuel gas, the carbon monoxide concentration of which is sufficiently lowered, the fuel gas is supplied from the reformer 500 to the fuel cell 501. This makes it possible to prevent the anode catalyst in the polymer electrolyte fuel cell from getting poisoned.

When the reformed gas shut-off valve 507 and the anode off-gas shut-off valve 508 are switched from the closed state to the open state, the bypass shut-off valve 509 is controlled to be opened and closed intermittently plural times and then closed.
Thereby, the material gas which was sealed in the vicinity of the fuel cell 501 is mixed with the reformed gas and diluted, and the diluted mixture gas is supplied to the combustor 500a. This can suppress a combustion state from becoming unstable.

### Citation Lists

### Patent Literature

Patent Literature 1: Japanese Laid-Open Patent Application Publication No. 2008-066096

### Summary of the Invention

### Technical Problem

However, in the fuel cell system disclosed in Patent Literature 1, the following problem exists.

In the fuel cell system disclosed in Patent Literature 1, when the reformed gas shut-off valve 507 is switched from the closed state to the open state, at the start of the start-up operation, the bypass shut-off valve 509 is opened and closed intermittently plural times and then closed to dilute the material gas with the reformed gas. This is not enough to stabilize the combustion in the combustor 500a.

This cause was intensively researched by the present inventors, and as a result, it was discovered that an oxygen amount required for combustion changes significantly when the reformed gas shut-off valve 507 is switched from the closed state to the open state. To be specific, assuming that 100% of methane which is the material gas is converted into hydrogen (conversion rate is 100%: in general, conversion rate is 75% to 95%, and 5% ~ 25% methane is left in the fuel gas) in the fuel processor in a case where methane is used as the material gas and the temperature of the fuel processor has increased up to a predetermined temperature, hydrogen with a high concentration is supplied to the combustor 500a through the third gas passage 504 in the state where the reformed gas shut-off valve 507 is closed, and therefore, if oxygen with an amount corresponding to a half of the amount of hydrogen gas supplied is supplied, the supplied gas can be combusted perfectly as can be understood from the formula (1) illustrated below.

However, when the reformed gas shut-off valve 507 is opened and the methane remaining within the fuel cell 501 is purged by hydrogen, and supplied to the combustor 500a with a rate equal to that of hydrogen, oxygen with an amount which is twice as much as that of the gas (methane) supplied becomes necessary as expressed as the formula (2) illustrated below. At this time, therefore, the required oxygen amount is four times as much as that in a state where the reformed gas shut-off valve 507 is closed. Thus, combustion in the combustor 500a cannot be stabilized sufficiently merely by opening and closing the bypass shut-off valve 509 plural times intermittently, when the reformed gas shut-off valve 507 is changed from the closed state to open state.

H₂ + 1/2O₂ → H₂O (1)

CH₄ + 2O₂ → CO₂ + 2H₂O (2)

For example, when the material gas consists of 100% propane, oxygen of an amount which is five times as much as that of the gas (propane) supplied become necessary as expressed as the formula (3) illustrated below. Therefore, the amount of oxygen necessary when the reformed gas shut-off valve 507 is opened and the propane remaining within the fuel cell 501 is purged by hydrogen, and supplied to the combustor 500a with a rate equal to that of hydrogen, is ten times as much as that in a state where the reformed gas shut-off valve 507 is closed. Under the circumstances, it is difficult to stabilize the combustion in the combustor 500a.

CH₃H₈ + 5O₂ → 3CO₂ + 4H₂O (3)

For the above stated reason, the fuel cell system disclosed in the Patent Literature 1 has a problem that combustion in the combustor 500a becomes unstable when the reformed gas shut-off valve 507 is switched from the closed state to the open state.

In view of the problem associated with the conventional fuel cell system, an object of the present invention is to provide a fuel cell power generation system capable of sufficiently stabilizing combustion in a burner when supplying of the fuel gas to a stack starts.

### Solution to Problem

To achieve the above described object, a fuel cell system of the present invention comprises a fuel cell configured to generate electric power using fuel gas containing hydrogen and oxidizing gas; a fuel processor configured to reform a material gas to generate the fuel gas; a burner configured to combust at least one of off-gas containing hydrogen which has not been consumed in power generation in the fuel cell, the material gas and the fuel gas; a first gas passage connecting the fuel processor to the fuel cell; a second gas passage connecting the fuel cell to the burner; a third gas passage connecting the first gas passage to the second gas passage such that the fuel cell is bypassed; a passage switching means configured to switch a destination of gas flowing through the first gas passage to at least one of the fuel cell and the third gas passage; and a controller configured to control the passage switching means such that the fuel gas is supplied to the first gas passage discontinuously and the fuel gas is supplied to the third gas passage discontinuously or continuously, when supplying of the fuel gas to the fuel cell starts.

As used herein, the passage switching means may be a means used for switching a passage through which the supplied gas flows, such as a three-way valve or a plurality of electromagnetic valves.

In accordance with this configuration, at the start-up operation of the fuel cell system, the material gas purged from the fuel cell is supplied to the burner after it is diluted with the fuel gas in the case where the passage through which the fuel gas flows is only the third passage. This makes it possible to suppress the air-fuel ratio in the burner from getting deviated significantly and combustion from becoming stable in the burner.

### Advantageous Effects of the Invention

In accordance with the fuel cell system of the present invention, when supplying of the fuel gas generated in the fuel processor to the fuel cell starts, at the start-up operation of the fuel cell system in which the fuel cell is filled with the material gas preliminarily, it is possible to suppress the air-fuel ratio in the burner from getting deviated.

### Brief Description of the Drawings

[Fig. 1] Fig. 1 is a schematic view showing a configuration of a fuel cell system according to Embodiment 1 of the present invention.
[Fig. 2] Fig. 2 is a flowchart schematically showing a part of the operation of the fuel cell system according to Embodiment 1 of the present invention.
[Fig. 3] Fig. 3 is a timing chart correlatively showing a state of a valve in a flow of the operation of Fig. 2.
[Fig. 4] Fig. 4 is a schematic view showing a configuration of a fuel cell system according to Embodiment 2 of the present invention.
[Fig. 5] Fig. 5 is a flowchart schematically showing a part of the operation of the fuel cell system according to Embodiment 2 of the present invention.
[Fig. 6] Fig. 6 is a timing chart correlatively showing a state of a valve in a flow of the operation of Fig. 5.
[Fig. 7] Fig. 7 is a schematic view showing a configuration of a fuel cell system according to Embodiment 3 of the present invention.
[Fig. 8] Fig. 8 is a flowchart schematically showing a part of the operation of the fuel cell system according to Embodiment 3 of the present invention.
[Fig. 9] Fig. 9 is a timing chart correlatively showing a state of a valve in a flow of the operation of Fig. 8.
[Fig. 10] Fig. 10 is a schematic view showing a configuration of a fuel cell system according to Embodiment 4 of the present invention.
[Fig. 11] Fig. 11 is a flowchart schematically showing a part of the operation of the fuel cell system according to Embodiment 4 of the present invention.
[Fig. 12A] Fig. 12A is a timing chart correlatively showing a state of a valve in a flow of the operation of Fig. 11.
[Fig. 12B] Fig. 12B is a timing chart correlatively showing a state of a valve in a flow of the operation of Fig. 11.

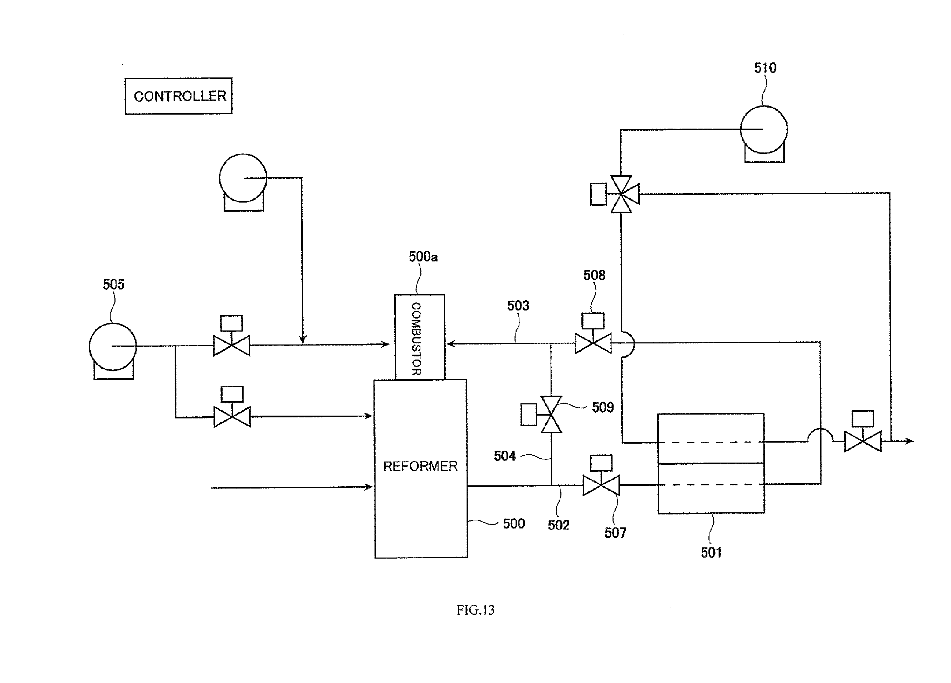

[Fig. 13] Fig. 13 is a schematic view showing a configuration of a fuel cell system disclosed in Patent Literature 1.

### Description of Embodiments

According to a first invention, a fuel cell system comprises a fuel cell configured to generate electric power using fuel gas containing hydrogen and oxidizing gas; a fuel processor configured to reform a material gas to generate the fuel gas; a burner configured to combust at least one of off-gas containing hydrogen which has not been consumed in power generation in the fuel cell, the material gas and the fuel gas;
a first gas passage connecting the fuel processor to the fuel cell; a second gas passage connecting the fuel cell to the burner; a third gas passage connecting the first gas passage to the second gas passage such that the fuel cell is bypassed; a passage switching means configured to switch a destination of gas flowing through the first gas passage to at least one of the fuel cell and the third gas passage; and a controller configured to control the passage switching means such that the fuel gas is supplied to the first gas passage discontinuously and the fuel gas is supplied to the third gas passage discontinuously or continuously, when the fuel gas starts to be supplied to the fuel cell.

In accordance with this configuration, when supplying of the fuel gas generated in the fuel processor to the fuel cell starts, at the start-up operation of the fuel cell system in which the fuel cell is filled with the material gas preliminarily, it is possible to suppress the air-fuel ratio in the burner from getting deviated.

In a second invention according to the first invention, the controller may be configured to control the passage switching means to switch, predetermined number of times, a state where the fuel gas flows only through the third gas passage for a predetermined period of time and a state where the fuel gas flows only through the first gas passage for a predetermined period of time, when the fuel gas starts to be supplied to the fuel cell.

In accordance with this configuration, the material gas filled in the fuel cell is purged by the fuel gas for a predetermined period of time during which the passage is switched such that the fuel gas flows only through the fuel cell, and the passage is switched such that the fuel gas flows only through the third passage again after passage of the predetermined period of time, thus supplying the material gas of a predetermined amount to the burner after it is diluted with the fuel gas.

Typically, in a location between the fuel cell and the burner on the second gas passage, there are a heat exchanger for condensing steam in the off-gas or a water tank for storing condensed water. The material gas that has been purged from the fuel cell and the fuel gas that has flowed through the third gas passage are mixed in the heat exchanger or the like and the diluted material gas is supplied to the burner. By setting the predetermined period of time to a sufficiently short one, the amount of the material gas purged one time can be reduced to a level at which the air-fuel ratio is not affected significantly in combustion in the burner, and thus, the material gas can be sufficiently diluted. In addition, by repeating this predetermined number of times, all of the material gas filled in the fuel cell can be purged. As a result, stable combustion is achieved.

Since the switching occurs between the state where the fuel gas flows only through the fuel cell and the state where fuel gas flows only though the third gas passage so as to bypass the fuel cell, the material gas from the fuel can be diluted surely and supplied to the burner even when a pressure loss of the fuel cell changes due to clogging of the condensed water, etc., or a difference occurs in the relationship of pressure loss in each passage, due to a variation among devices and components manufactured in large quantity.

In a third invention according to the first invention, the controller may be configured to control the passage switching means to switch, predetermined number of times, a state where the fuel gas flows through both the first gas passage and the third gas passage for a predetermined period of time and a state where the fuel gas flows only through the third gas passage for a predetermined period of time, when supplying of the fuel gas to the fuel cell starts.

In accordance with this configuration, the material gas filled in the fuel cell is purged by the fuel gas only when switching of the passage through which the fuel gas flows is performed so that the fuel gas flows through both the fuel cell and the third gas passage. In this case, also, the fuel gas flowing into the fuel cell and into the third gas passage, due to a difference between a pressure loss of the fuel cell and a pressure loss of the third gas passage, purges the material gas from the fuel cell. Therefore, the material gas within the fuel cell is diluted and supplied to the burner more easily in the third invention than the first invention and the second invention.

In a fourth invention according to one of the first to third inventions, the passage switching means may be a passage switching valve provided on a branch point where the third gas passage branches from the first gas passage. The passage of the fuel gas can be switched to a specified passage with a relatively simple configuration.

In a fifth invention according to one of the first to third inventions, the passage switching means may be a passage switching valve provided on a joint point where the third gas passage and the second gas passage are joined together. The passage of the fuel gas can be switched to a specified passage with a relatively simple configuration.

In a sixth invention according to one of the first to third inventions, the passage switching means may include a first on-off valve provided on the third gas passage, and a second on-off valve which is provided on a portion of the first gas passage which is downstream of the branch point where the third gas passage branches from the first gas passage and upstream of the fuel cell, or a portion of the second gas passage which is upstream of the joint point where the second gas passage and the third gas passage are joined together, and downstream of the fuel cell. In accordance with this, the passage of the fuel gas can be switched to a specified passage with a relatively simple configuration. Since the operation time of the on-off valve is generally shorter than that of a passage switching valve, the passage switching is accomplished in a relatively short time.

In a seventh invention according to one of the first to third inventions, the passage switching means may include a first on-off valve provided on the third gas passage, and a second on-off valve which is provided on a portion of the first gas passage which is downstream of the branch point where the third gas passage branches from the first gas passage and upstream of the fuel cell, and a third on-off valve provided on a portion of the second gas passage which is upstream of the joint point where the second gas passage and the third gas passage are joined together and downstream of the fuel cell. In accordance with this, the passage of the fuel gas can be switched to a specified passage with a relatively simple configuration. Since the operation time of the on-off valve is generally shorter than that of a passage switching valve, the passage switching is accomplished in a relatively short time.

In an eighth invention according to one of the first to seventh inventions, the fuel cell system may comprise a determiner means configured to determine a kind of the material gas; and the controller may be configured to change at least one of the predetermined period of time and the predetermined number of times depending on the kind of the material gas determined by the determiner means. In accordance with this, if the kind of the material gas is changed, the kind of the material gas is determined and at least one of the predetermined period of time and the predetermined number of times is changed. This makes it possible to provide a fuel cell system which can suppress the air-fuel ratio in the burner from getting deviated and carry out combustion stably, when supplying of the fuel gas generated in the fuel processor starts, at the start-up operation of the fuel cell system in which the fuel cell is filled with the material gas preliminarily.

Hereinafter, embodiments of the present invention will be described with reference to the drawings. The embodiments are in no way intended to limit the present invention.

### (Embodiment 1)

Firstly, a configuration of a fuel cell system according to Embodiment 1 of the present invention will be described with reference to the drawings.

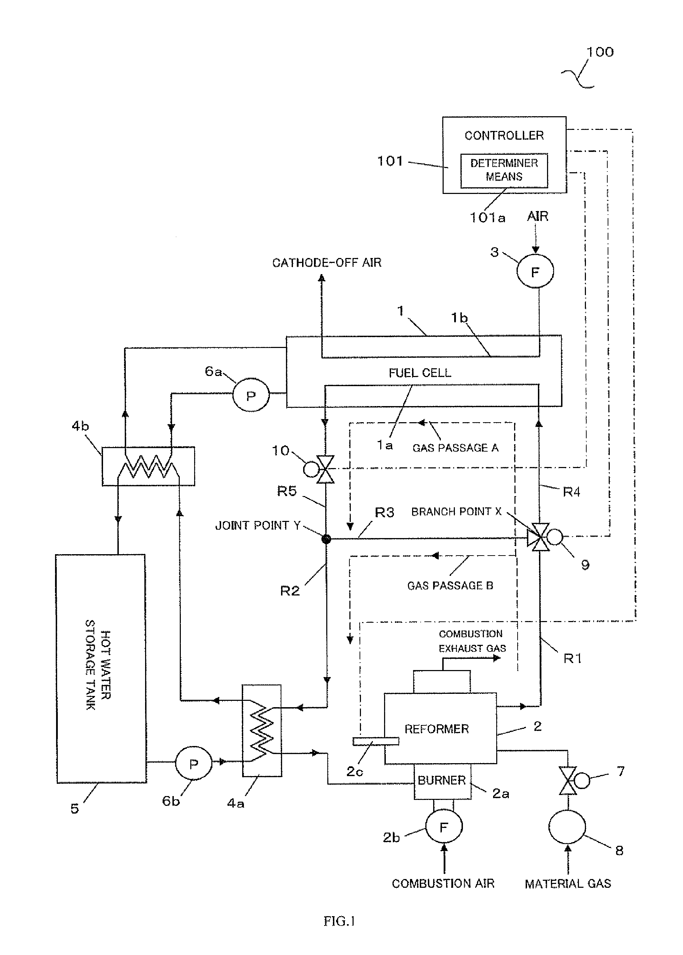

Fig. 1 is a schematic view showing a configuration of a fuel cell system according to Embodiment 1 of the present invention. Referring to Fig. 1, solid lines connecting components constituting the fuel cell system indicate paths through which water, fuel gas, oxidizing gas, etc., flow. Arrows depicted on these solid lines indicate directions in which the water, the fuel gas, the oxidizing gas, etc., flow, during normal operation. One-dotted lines connecting the components indicate input/output operation of control signals. In Fig. 1, only the components required to explain the present invention are depicted, and other components are omitted.

As shown in Fig. 1, the fuel cell system 100 according to the present embodiment includes a fuel cell 1 which is a power generation main section. As the fuel cell 1, in the present embodiment, a polymer electrolyte fuel cell is used.

The fuel cell 1 carries out power generation using hydrogen-rich fuel gas exhausted from a fuel processor described later and supplied to an anode passage 1a within the fuel cell 1, and an oxidizing gas (normally, air) supplied from a blower 3 described later to a cathode passage 1b within the fuel cell 1, thereby outputting predetermined electric power. Each of the fuel gas and the oxidizing gas has been humidified to have a high humidity to prevent an electrolyte membrane which is a fluorinated resin ion exchange membrane within the fuel cell 1 from getting dried. The humidification is carried out by using a total enthalpy heat exchanger performing heat exchange with an off-gas or a humidifying pump. Alternatively, the fuel gas may be humidified by using water supplied together with a material gas when a fuel gas is generated from the material gas in the fuel processor as described later. Heat generated during power generation in the fuel cell 1 is recovered by cooling water supplied to a cooling water passage (not shown) within the fuel cell 1 and discharged to outside the fuel cell 1. Detained description of the internal structure of the fuel cell 1 will be omitted because it is similar to the internal structure of a general polymer electrolyte fuel cell

As shown in Fig. 1, the fuel cell system 100 includes at least the reformer 2 as the fuel processor of the present invention. A material gas such as natural gas (containing methane as major component) or LPG (containing propane as major component), containing an organic compound composed at least carbon and hydrogen, and water are supplied to a filling layer (not shown) of a reforming catalyst of the reformer 2 heated up to a predetermined temperature, and the reformer 2 allows steam reforming reaction to proceed to generate a hydrogen-rich fuel gas from the material gas.

The amount of the material gas supplied to the reformer 2 is adjusted by a material gas supplier 8 as described later, which is an example of a raw material supplier of the present invention. In this case, a material gas valve 7 which is an on-off valve permits or does not permit the material gas to be supplied to the reformer 2. In this fuel processor, a reformer 2 for causing a steam reforming reaction to proceed, and a shift converter for reducing carbon monoxide in the fuel gas exhausted from the reformer 2 and a CO removing device for reducing carbon monoxide in the fuel gas exhausted from the reformer 2, are connected sequentially, although these are not depicted in Fig. 1.

The reformer 2 includes, for example, a burner 2a for combusting the material gas to heat the reforming catalyst (not shown) filled into the reformer 2, and a combustion air fan 2b for supplying from atmosphere air required to combust the material gas or the like in the burner 2a. The burner 2a combusts at least one of off-gas exhausted from the fuel cell 1, the fuel gas generated in the fuel processor, and the material gas supplied by the material gas supplier 8, to heat the reforming catalyst.

The reformer 2 includes a temperature sensor 2c for measuring a temperature ThK of the reforming catalyst filled into the reformer 2. The temperature sensor 2c is embedded into the reforming catalyst from outside the reformer 2 to provide a seal configuration for inhibiting communication between inside and outside the reformer 2. The temperature sensor 2 is provided with a wire to output an electric signal indicating the temperature of the reforming catalyst to the controller 101 as described later.

The shift converter includes a shift catalyst for reducing a concentration of carbon monoxide in the fuel gas exhausted from the reformer 2 by an aqueous gas shift reaction. The CO removing device includes a CO removing catalyst for further reducing the concentration of carbon monoxide in the fuel gas exhausted from the shift converter by an oxidization reaction or a methanization reaction. The shift converter and the CO removing device are respectively operated under temperature conditions suitable for chemical reactions proceeding in the shift converter and the CO removing device, respectively, to effectively reduce carbon monoxide contained in the fuel gas.

The detailed description of the components other than the reformer 2, the shift converter and the CO removing device within the fuel processor is omitted, because it is similar to that of the internal configuration of a general fuel processor. Hereinafter, the fuel processor including the reformer 2, the shift converter and the CO removing device will be collectively referred to as the reformer 2.

As shown in Fig. 1, the fuel cell system 100 includes the material gas supplier 8. The material gas supplier 8 is a booster pump for increasing a pressure of the material gas such as the natural gas supplied from the infrastructure of the natural gas or the like and supplies the raw material to the reformer 2 via the above material gas valve 7, during the power generation operation of the fuel cell system 100, etc.. The output of the material gas supplier 8 is controlled by a controller 101 as described later such that it can adjust the amount of the material gas supplied to the reformer 2 as necessary.

As shown in Fig. 1, the fuel cell system 100 includes a blower 3. The blower 3 suctions the air from atmosphere and supplies the air to the cathode passage 1b of the fuel cell 1 as the oxidizing gas. Air (hereinafter referred to as cathode off-air) containing oxygen which has not been consumed in power generation is exhausted to outside the fuel cell system 100 after passing through the cathode passage 1b of the fuel cell 1. In this case, heat of cathode-off air may be utilized to heat the water in a hot water storage tank 5 as described later.

As shown in Fig. 1, to supply the fuel gas generated in the reformer 2 to the anode passage 1a of the fuel cell 1, a passage corresponding to a first gas passage includes a fuel gas passage R1 and a fuel cell inlet passage R4 connected to the fuel gas passage R1 at a branch point X, to connect the fuel cell 1 to the reformer 2. The anode passage 1 a of the fuel cell 1 is connected to the burner 2a by a second gas passage including a fuel cell outlet passage R5 and an off-gas passage R2 connected to the fuel cell outlet passage R5 at a joint point Y. One end of the bypass passage R3 corresponding a third passage is connected to the fuel gas passage R1 at the branch point X, while the other end thereof is connected to the off-gas passage R2 at the joint point Y.

A three-way valve 9 as a passage switching means is provided on the branch point X. The controller 101 described later controls the three-way valve 9 to switch between a state where the fuel gas passage R1 and the fuel cell inlet passage R4 communicate with each other, and a state where the fuel gas passage R1 and the bypass passage R3 communicate with each other, as desired. An on-off valve 10 is provided on the fuel cell outlet passage R5 and controlled to be opened and closed by the controller 101 as described later.

To be specific, as shown in Fig. 1, when the three-way valve 9 is switched to allow the fuel gas passage R1 to communicate with the fuel cell inlet passage R4 (the three-way valve 9 is actuated to allow communication between the fuel gas passage R1 and the fuel cell inlet passage R4 and to inhibit the fuel gas passage R1 from communicating with the bypass passage R3), and the on-off valve 10 is opened, a gas passage A is formed to include the fuel gas passage R1, the fuel cell inlet passage R4, the anode passage 1a, the fuel cell outlet passage R5 and the off-gas passage R2. On the other hand, when the three-way valve 9 is switched to allow the fuel gas passage R1 to communicate with the bypass passage R3 (the three-way valve 9 is actuated to allow communication between the fuel gas passage R1 and the bypass passage R3 and inhibit the fuel gas passage R1 from communicating with the fuel cell inlet passage R4), a gas passage B is formed to include the fuel gas passage R1, the bypass passage R3 and the off-gas passage R2. When the on-off valve 10 is closed and the three-way valve 9 is switched to allow the fuel gas passage R1 to communicate with the bypass passage R3, it is possible to seal the anode passage 1a of the fuel cell 1, and passages in the vicinity of the anode passage 1 (the fuel cell inlet passage R4 connected to the anode passage 1a, a portion of the fuel cell outlet passage R5 connected to the anode passage 1a, which portion is upstream of the on-off valve 10).

The fuel cell system 100 includes a first heat exchanger 4a and a second heat exchanger 4b. The first heat exchanger 4a exchanges heat between the off-gas of the fuel cell 1 and water supplied by a hot water pump 6b from a hot water storage tank 5 as described later for the purpose of hot water supply. The off-gas is cooled by the first heat exchanger 4a such that steam contained in the off-gas is condensed, and the resulting off-gas is supplied to the burner 2a in a state where its dew point has been lowered to a temperature near a temperature of the water supplied from the hot water storage tank 5, after passing through a gas-liquid separator which is not shown. The condensed water separated by the gas-liquid separator which is not shown is recovered through a condensed water recovery passage which is not shown and is used as water required for the reforming.

The second heat exchanger 4b exchanges heat between cooling water which is discharged from a cooling water passage (not shown) within the fuel cell 1 by a cooling water pump 6a and has an increased temperature, and the water supplied from the water storage tank 5 via the first heat exchanger 4a. The cooling water which has been cooled as the result of heat exchange in the second heat exchanger 4b is sent to be re-supplied to the cooling water passage of the fuel cell 1 by the operation of the cooling water pump 6a.

As shown in Fig. 1, the fuel cell system 100 includes the hot water storage tank 5. The hot water storage tank 5 stores the water heated by the heat exchangers 4a and 4b. The water stored in the hot water storage tank 5 is circulated via the heat exchangers 4a and 4b by the operation of the hot water pump 6b. In this case, the water supplied from the hot water storage tank 5 is heated in the heat exchangers 4a and 4b by heat of the off-gas exhausted from the fuel cell 1 and heat of the cooling water discharged by the operation of the cooling water pump 6a and having an increased temperature. The water heated by the heat exchangers 4a and 4b is stored in the hot water storage tank 5. The heated water which is stored in the hot water storage tank 5 is utilized to supply hot water, and other purpose, as desired.

The fuel cell system 100 further includes the controller 101. The controller 101 properly controls the operation of the components in the fuel cell system 100. For example, the controller 101 includes a memory section, a timer section, and a CPU, etc., although these are not particularly shown in Fig. 1. Programs relating to the operation of the components in the fuel cell system 100 are pre-stored in the memory section of the controller 101. Based on the programs stored in the memory section, the controller 101 properly controls the operation of the fuel cell system 100.

The controller 101 includes a determiner means 101a for determining a kind of the material gas, and performs control based on a program corresponding to each material gas pre-stored, depending on the kind of the material gas. As the determiner means for determining the kind of the material gas, there is a method in which a user or operator selects and sets in software the kind of gas supplied to the fuel cell system by an interface such as a remote controller, or a method in which the user or operator manually selects and sets the kind of gas supplied to the fuel cell system in hardware by a switch, or the like to identify the kind of the gas, before initiating the operation of the fuel cell system. In another method, for example, a predetermined amount of material gas is combusted in the burner 2a for a predetermined time, a temperature increase caused by combustion heat is detected and is compared to threshold of a temperature increase of each kind of gas pre-stored in the controller 101 to identify the kind of the material gas automatically.

Next, the operation of the fuel cell system 100 according to Embodiment 1 of the present invention will be described with reference to the drawings.

In description below, it is assumed that during start-up operation of the fuel cell system 100, the anode passage 1a of the fuel cell 1 and the passages in the vicinity of the anode passage 1a are filled preliminarily with the material gas including an organic compound composed at least carbon and hydrogen by a pressure-keeping operation of a shut-down operation as described later. Filling of the material gas into the anode passage 1a of the fuel cell 1 and the passages in the vicinity of the anode passage 1a is carried out by supplying the material gas to the anode passage 1a of the fuel cell 1 and the passages in the vicinity of the anode passage 1a by using the material gas supplier 8 shown in Fig. 1.

As used herein, the term "during start-up operation" in the present embodiment refers to a period of time "from when the controller 101 issues a start-up command until a power generation controller which is not shown in Fig. 1 in the fuel cell 1 takes out electric power from the fuel cell 1." The term "during shut-down operation" in the present embodiment refers to a period of time "from when the controller 101 issues a shut-down command until the overall operation of the fuel cell system 100 completely stops". Note that even "during shut-down operation", the controller 101 is active without stopping its operation.

The fuel cell system 100 operates as described below under control of the controller 101.

To be specific, the material gas used for generating hydrogen is supplied from the material gas supplier 8 of Fig. 1 to the reformer 2. To generate steam for allowing the steam reforming reaction to proceed, water is supplied from an infrastructure such as tap water to the reformer 2. To allow the steam reforming reaction to proceed in the reformer 2, the burner 2a heats the reforming catalyst filled in the reformer 2.

In an initial stage of the start of the start-up operation of the fuel cell system 100, the reforming catalyst in the reformer 2 is heated by the burner 2a and the temperature of the reforming catalyst increases gradually, and does not reach a predetermined temperature yet. For this reason, the steam reforming reaction in the reformer 2 does not proceed suitably. Therefore, the fuel gas exhausted from the reformer 2 contains a large quantity of carbon monoxide. Accordingly, in the present embodiment, at the start of the start-up operation of the fuel cell system 100, the controller 101 causes the three-way valve 9 to switch to allow communication between the fuel gas passage R1 and the bypass passage R3 to form the gas passage B including the fuel gas passage R1, the bypass passage R3 and the off-gas passage R2, until the temperature of the reforming catalyst in the reformer 2 reaches a predetermined temperature and the reformer 2 is able to generate fuel gas with a good quality, the carbon monoxide concentration of which has been lowered sufficiently (until a predetermined operation condition is met). The fuel gas containing carbon monoxide with a high concentration which is generated in the reformer 2 is supplied to the gas passage B, and supplied to the burner 2a via the gas passage B. At this time, the on-off valve 10 is closed.

In the burner 2a, the fuel gas containing carbon monoxide with a high concentration is combusted together with the air supplied to the burner 2a by a combustion air fan 2a to heat the reforming catalyst within the reformer 2 up to a predetermined temperature. The fuel gas combusted in the burner 2a is exhausted to outside the fuel cell system 100 as a combustion exhaust gas. The amount of air supplied to the burner 2a by the combustion air fan 2b is suitably set according to an amount of the material gas supplied from the material gas supplier 8 to the reformer 2.

Now, the amount of air supplied from the combustion air fan 2b to the burner 2a will be specifically described.

Firstly, a case where the material gas which is a natural gas containing methane as a major component will be described hereinafter.

To be specific, when the material gas is the natural gas, after start of the start-up operation of the fuel cell system 100, in the reformer 2, hydrogen is generated from the natural gas through the chemical reaction expressed as formula (1), in theory. In actuality, the natural gas contains propane and others in addition to methane, but description will be given assuming that the natural gas is 100% methane, for the sake of convenience.

CH₄ + 2H₂O → CO₂ + 4H₂ (1)

To be specific, when the flow rate of the natural gas supplied from the material gas supplier 8 to the reformer 2 is Q (L/minutes) for the sake of convenience, the flow rate of hydrogen generated in the reformer 2 and supplied to the burner 2a via the gas passage B is 4Q (L/minutes), according to the chemical reaction expressed as the formula (1). To allow a combustion reaction to proceed in the burner 2a as expressed as formula (2) so that hydrogen of a flow rate of 4Q (L/minutes) supplied to the burner 2a is combusted perfectly, it is necessary to supply oxygen with a rate of 2Q (L/minutes).

4H₂ + 2O₂ → 4H₂O (2)

Assuming that concentration of oxygen in air is 20% for the sake of convenience, in theory, the controller 101 may control the combustion air fan 2b such that the combustion air fan 2b supplies to the burner 2a air with a flow rate of 10Q(L/minutes) in theory. Actually, however, because of the characteristic of the burner 2a, imperfect combustion often occurs under the condition in which the flow rate of air is 10Q(L/minutes). To solve this, in Embodiment 1, the controller 101 regulates the rotational number of the combustion air fan 2b such that air is supplied to the burner 2a with a flow rate of 15Q(L/minutes) which is 1.5 times as high as the flow rate of 10Q(L/minutes) required in theory. A ratio of the flow rate of air actually supplied with respect to the flow rate of air required to perfectly combust a gas ((in this case, hydrogen of a flow rate of 4Q (L/minutes)) in theory will be referred to as air-fuel ratio hereinafter. For example, the air-fuel ratio is 1 when air of a flow rate of 10Q (L/minutes) is supplied with respect to the natural gas of a flow rate of Q(L/minutes), while the air-fuel ratio is 1.5 when air of a flow rate of 15Q (L/minutes) is supplied with respect to the natural gas of a flow rate of Q(L/minutes). Also, it is assumed that concentration of oxygen in air is 20% hereinafter for the sake of convenience.

That is, in Embodiment 1, in the start-up operation of the fuel cell system 100, the amount of air supplied from the combustion fan 2b to the burner 2a is set on the basis of the amount of hydrogen generated in the reformer 2 in theory, i.e., the amount of the natural gas supplied from the material gas supplier 8 to the reformer 2. Thereby, the fuel gas containing carbon monoxide with a high concentration is combusted in the burner 2a. By heat energy generated in the burner 2a, the reforming catalyst in the reformer 2 is heated.

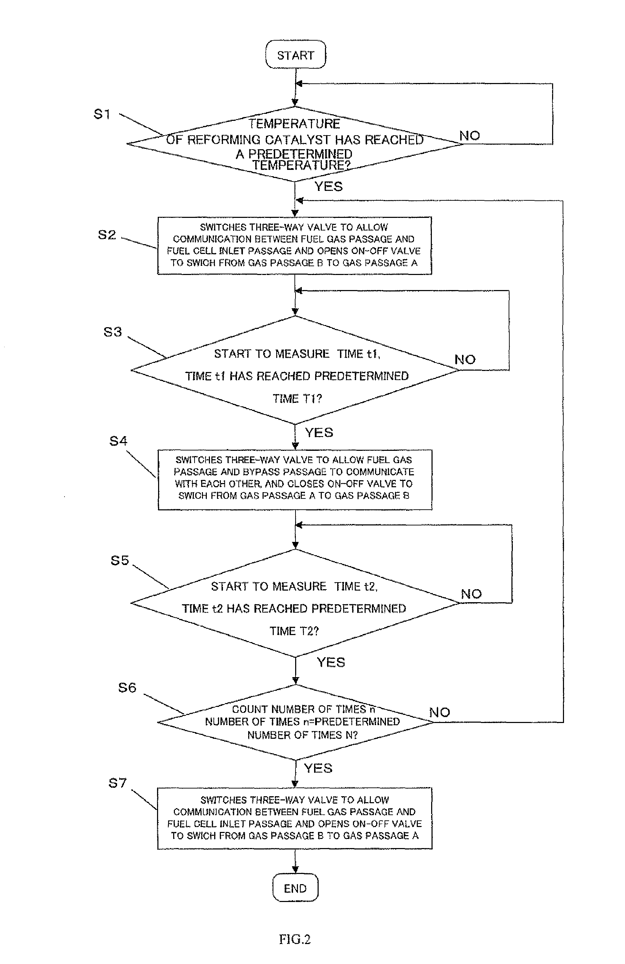

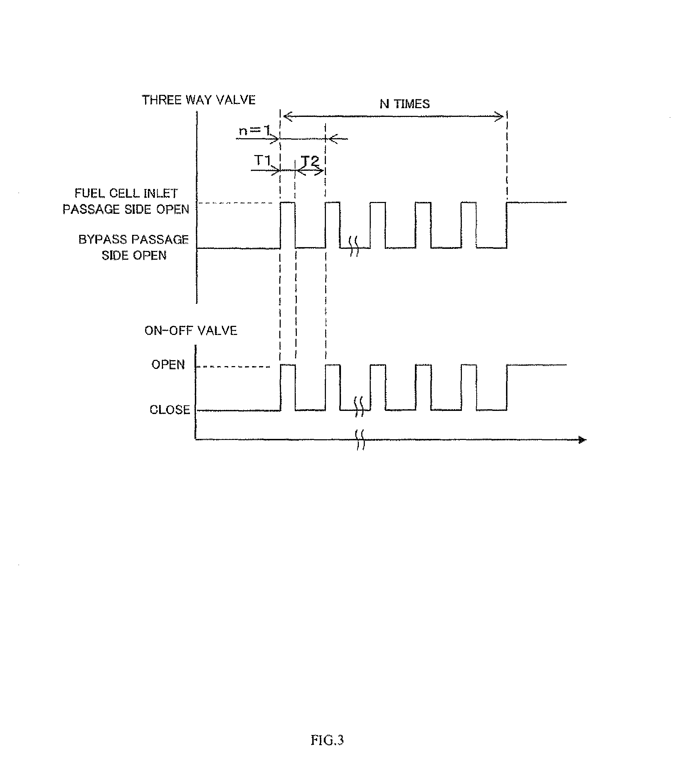

The operation which takes place thereafter will be described in detail with reference to Figs. 2 and 3 to explain the present invention more specifically

Fig. 2 is a flowchart schematically showing a part of the operation of the fuel cell system according to Embodiment 1 of the present invention. Fig. 3 is a timing chart correlatively showing a state of a valve in a flow of the operation of Fig. 2.

As shown in Figs. 2 and 3, when the temperature of the reforming catalyst in the reformer 2 increases by the heat generated by combustion of the fuel gas containing carbon monoxide with a high concentration in the burner 2a, the controller 101 determines whether or not the temperature of the reforming catalyst has reached a predetermined temperature suitable for the steam reforming reaction (step S1).

The temperature of the reforming catalyst is detected by the temperature sensor 2c embedded in the reforming catalyst. A signal output from the temperature sensor is input to the controller 101. The controller 101 analyzes the input signal and thereby recognizes the temperature of the reforming catalyst. If the controller 101 determines that the temperature of the reforming catalyst has not reached the predetermined temperature yet (NO in step S51), the burner 2a continues to heat the reforming catalyst until the controller 101 determines that the temperature of the reforming catalyst has reached the predetermined temperature.

On the other hand, if the controller 101 determines that the temperature of the reforming catalyst has reached the predetermined temperature in step S1 (YES in step S1), the fuel cell system 100 goes to step S2 as described later.

Now, detailed discussion will be given of a problem occurring in a case where after the controller 101 determines that the temperature of the reforming catalyst has reached the predetermined temperature in step S1 (YES in step S51), the controller 101 causes the three-way valve 9 to switch to allow communication between the fuel gas passage R 1 and the fuel cell inlet passage R4 and opens the on-off valve 10 so that the passage of the fuel gas supplied from the reformer 2 is switched from the gas passage B to the gas passage A.

When the passage through which the fuel gas supplied from the reformer 2 flows is switched from the gas passage B to the gas passage A, the natural gas filled in the gas passage extending from the three-way valve 9 to the on-off valve 10, including the anode passage 1a of the fuel cell 1, is purged by the fuel gas and supplied to the burner 2a. At this time, the flow rate of the natural gas supplied to the burner 2a is substantially equal to the flow rate of the fuel gas supplied from the reformer 2 to the fuel cell 1.

According to the above formula (1), in the case where the flow rate of the natural gas which is the material gas supplied to the reformer 2 is Q(L/minutes), carbon diode of a flow rate of Q(L/minutes) and hydrogen of a flow rate of 4Q (L/minutes) are supplied from the reformer 2 toward the fuel cell 1. Therefore, the flow rate of the natural gas purged toward the burner 2a is 5Q(L/minutes).

As can be seen from formula (3), to perfectly combust the natural gas of a flow rate of 5Q (L/minutes) in the burner 2a, oxygen of a flow rate of 10Q(L/minutes) is required when the air-fuel ratio is 1, and it is necessary to supply air with a flow rate of 50Q (L/minutes) to the burner 2a.

5CH₄ + 10O₂ → 5CO₂ + 10H₂O (3)

However, in the start-up operation of the fuel cell system 100 of Embodiment 1, the burner 2a is supplied with the natural gas of a flow rate of Q(L/minutes) and only the air of a flow rate of 15Q(L/minutes) with which the air-fuel ratio is 1.5 with respect to hydrogen of a flow rate of 4Q (L/minutes) which is generated from the natural gas of a flow rate of Q(L/minutes).

Because of this, when the passage of the fuel gas is switched from the gas passage B to the gas passage A, the natural gas filled in the gas passage from the fuel inlet valve 9 to the fuel cell outlet valve 10, including the anode passage 1a of the fuel cell 1, is purged by the fuel gas and supplied to the burner 2a, and the air-fuel ratio in the burner 2a becomes 0.3. When a volume of the gas passage from the three-way valve 9 to the on-off valve 10, including the anode passage 1a of the fuel cell 1, is Vt, a state where the air-fuel ratio in the burner 2a is 0.3 might continue approximately for a period of time which is about Vt/5Q(minutes), and imperfect combustion might occur and generate carbon monoxide, which might be emitted to outside the fuel cell system 100.

To solve this, in the start-up operation of the fuel cell system 100 of Embodiment 1, if the controller 101 determines that the temperature of the reforming catalyst has reached the predetermined temperature in step S1 (YES in step S1), the following control is initiated.

Firstly, the controller 101 switches the three-way valve 9 to allow communication between the fuel gas passage R1 and the fuel cell inlet passage R4 and opens the on-off valve 10 (step S2). Thereby, the gas passage is switched from the gas passage B to the gas passage A, and introduction of the fuel gas generated in the reformer 2 into the fuel cell 1 starts.

Then, the controller 101 measures time t1 that elapses from when the valve is operated in step S2 (step S3). Before the time t1 reaches a predetermined time (predetermined period of time) T1 (minutes) as described later (NO in step S3), the three-way valve 9 maintains a state where the fuel gas passage R1 and the fuel cell inlet passage R4 communicate with each other, and the on-off valve 10 maintains an open state.

If the controller 101 determines that the time t1 has reached the predetermined time T1 (minutes) (YES in step S3), the controller 101 switches the three-way valve 9 such that the fuel gas passage R1 and the bypass passage R communicate with each other, and closes the on-off valve 10 (step S4). Thereby, the gas passage is switched from the gas passage A to the gas passage B, and introduction of the fuel gas to the fuel cell 1 is stopped, so that the fuel gas is supplied to the burner 2a via the bypass passage R3.

Then, the controller 101 starts to measure a time t2 that elapses from when the valve is operated in step S4 (step S5). Before it is determined that the time t2 reaches a predetermined time (predetermined period of time) T2 (minutes) as described later (NO in step S5), the three-way valve 9 maintains a state where the fuel gas passage R1 and the bypass passage R3 communicate with each other, and the on-off valve 10 maintains a closed state.

If the controller 101 determines that the time t2 has reached the predetermined time T2 (minutes) as described later (YES in step S5), the controller 101 counts the number of times n a series of steps from step S2 to step S5 are performed (step S6).
The controller 101 adds 1 to the number of times (n ― 1) which was previously counted and stores it as n. If the counted number of times n is less than a predetermined number of times N as described later (NO in step S6), the controller 101 returns the process to step S2, and repeats operation from step S2 to step S6.

When the number of times n counted by the controller 101 is equal to the predetermined number of times N described later (YES in step S6), the controller 101 switches the three-way valve 9 to allow communication between the fuel gas passage R1 and the fuel cell inlet passage R4 and opens the on-off valve 10, which state is maintained (step S7). That is, the fuel gas is supplied to the fuel cell 1.

By supplying the fuel gas to the fuel cell 1 discontinuously as described above, it is possible to prevent the condensed water remaining within the fuel cell 1 from being supplied to the burner 2a continuously. Therefore, it is possible to suppress occurrence of a misfire in the burner 2a due to the condensed water.

Subsequently, detailed description will be given of the predetermined time T1, the predetermined time T2 and the number of times N.

In accordance with the above formula (1), when the flow rate of the natural gas which is the material gas supplied to the reformer 2 is Q(L/minutes), carbon dioxide of a flow rate of Q(L/minutes) and hydrogen of a flow rate of 4Q(L/minutes) are supplied from the reformer 2. Therefore, the flow rate of the fuel gas supplied from the reformer 2 is 5Q(L/minutes). Because of this, when the gas passage A is formed in step S2, the natural gas is purged from the anode passage 1a of the fuel cell 1 and the passages in the vicinity of the anode passage 1a with a flow rate of 5Q(L/minutes) and supplied to the burner 2a, for the predetermined time T1 (minutes) until the gas passage B is formed in step S4. That is, in theory, for T1 (minutes), the air-fuel ratio in the burner 2a is deviated.

Then, the gas passage B is formed in step S4, and then the process goes through step S5 and step S6 and returns to step S2. The natural gas of a flow rate of 5Q(L/minutes) is supplied to the burner 2a, for the predetermined time T2 (minutes) until the gas passage A is formed again. That is, in theory, for T2(minutes), the air-fuel ratio in the burner 2a becomes a proper one.

Therefore, while step S2 to step S6 are repeated, the air-fuel ratio is deviated for T1 (minutes), and becomes a proper one for T2(minutes) after a passage of T1 (minutes), which occurs repeatedly. Although the condensed water remaining within the fuel cell 1 is supplied to the burner 2a for T1(minutes), it is possible to suppress the condensed water remaining within the fuel cell 1 from being supplied to the burner 2a for T2(minutes), after passage of T1(minutes).

Actually, however, the natural gas purged from the anode passage 1a of the fuel cell 1 and the passages in the vicinity of the anode passage 1 a is mixed with and diluted by the fuel gas when passing through the first heat exchanger 4a and the like, while the natural gas is flowing from the fuel cell outlet passage R5 to the burner 2a through the off-gas passage R2.

By setting the predetermined time T1 to a time which is required for a passage switching operation by the three-way valve 9 and the on-off valve 10, and is as short as a time in a range from about several hundreds milliseconds (e.g., 200 milliseconds, 300 milliseconds) to about several seconds (e.g., 2 seconds, 3 seconds), the time for which the air-fuel ratio in the burner 2a is deviated can be shortened. This makes it possible to suppress imperfect combustion from occurring in the burner 2a. Actually, since time for which the natural gas can be combusted without imperfect combustion is varied due to combustion characteristic of the burner 2a, a volume of a passage leading to the burner 2a, etc., it is necessary to decide the predetermined time T1 experimentally. By setting the predetermined time T1 to a short one as described above, the amount of condensed water supplied to the burner 2a is small, and it is expected that the condensed water could evaporate, etc., before being supplied to the burner 2a, and could not affect combustion in the burner 2a.

By providing the predetermined time T2, the period of time for which the air-fuel ratio is deviated is allowed to take place discontinuously. The predetermined time T2 is required to be a period of time which passes until an influence of the deviation of the air-fuel ratio which occurred for the predetermined time T1 is eradicated. To this end, in the fuel cell system 100 of Embodiment 1, the relationship of the predetermined time T1 ≦ predetermined time T2 is set. This makes it possible to surely lessen the influence of the deviation of the air-fuel ratio and suppress a start-up operation time from getting long wastefully. In should be noted that the predetermined time T2 is preferably about twice as long as the predetermined time T1 in order to more effectively eradicate the influence of deviation of the air-fuel ratio which occurs for the predetermined time T1.

The predetermined number of times N is set to the number of times with which all of the natural gas filled in the anode passage 1a of the fuel cell 1 and the passages in the vicinity of the anode passage 1a can be purged out and supplied to the burner 2a. When the volume of the anode passage 1a of the fuel cell 1 and the passages in the vicinity of the anode passage 1a is V(L), the predetermined number of times N may be set to the number of times calculated according to the formula (4), because the volume of the natural gas purged each time is 5Q × T1 (L).

N = V / (5Q × T1) (4)

As described above, in the start-up operation of the fuel cell system of Embodiment 1, since complete switching between the gas passage A and the gas passage B is performed predetermined number of times, all of the natural gas which is the material gas is surely supplied from the anode passage 1a of the fuel cell 1 and the passages in the vicinity of the anode passage 1a to the burner 2a in such a manner that diluting of the natural gas is performed plural times, without being affected by a variation in a pressure loss which occurs among the fuel cells 1, and a change in the pressure loss caused by clogging of the water in the anode passage 1a. As a result, stable combustion in the burner 2a is achieved.

After the above step S7, the fuel gas is supplied from the reformer 2 to the fuel cell 1, and the fuel cell 1 starts a power generation operation as described below.

To be specific, the fuel gas, carbon monoxide concentration of which has been lowered sufficiently, is supplied from the reformer 2 to the anode passage 1a of the fuel cell 1, and the air is supplied from the blower 3 to the cathode passage 1a of the fuel cell 1. The fuel cell 1 carries out power generation to output predetermined electric power using the fuel gas supplied to the anode side and the air supplied to the cathode side. Off-gas which has not been consumed in the power generation is exhausted from the anode passage 1a of the fuel cell 1 and then supplied to the burner 2a via the fuel cell outlet passage R5 and the off-gas passage R2. The off-gas exchanges heat with water circulated by the hot water pump 6b from the hot water tank 5 and is thereby cooled in the first heat exchanger 4a before being supplied to the burner 2a. This allows the steam in the off-gas to be condensed. Then, the off-gas passes through the gas-liquid separator which is not shown and is supplied to the burner 2a in a state where its dew point has been lowered. The condensed water into which the off-gas has been condensed is recovered from the gas-liquid separator which is not shown through a condensed water recovery passage.

The off-gas is combusted in the burner 2a to promote the steam reforming reaction to heat the reforming catalyst in the reformer 2. The air exhausted from the cathode passage 1b of the fuel cell 1 is exhausted to outside the fuel cell system 100.

During the power generation operation, the fuel cell 1 generates heat through an electrochemical reaction for power generation. The heat generated in the fuel cell 1 is sequentially recovered by circulating cooling water through the cooling water passage inside the fuel cell 1 by the cooling water pump 6a. The heat recovered by circulating the cooling water by the cooling water pump 6a is utilized to heat the water circulated by the hot water pump 6b from the hot water tank 5, in the second heat exchanger 4b.

Next, a shut-down operation of the fuel cell system 100 will be described. In the shut-down operation of the fuel cell 100, firstly, the controller 101 causes the power generation controller to stop supplying of the electric power to an external power load, and causes the material gas supplier 8 and the blower 3 to stop. Thus, supplying of the fuel gas and the oxidizing gas to the fuel cell 1 is stopped, and the power generation in the fuel cell 1 is stopped. Also, supplying of the combustion gas (off-gas) to the burner 2a stops and combustion in the burner 2a stops (flame extinguishes). Then, the controller 101 closes both of the material gas valve 7 and the on-off valve 10. At this time, the controller 101 controls the three-way valve 9 to maintain a state where the fuel gas passage R1 and the fuel cell inlet passage R4 communicate with each other.

Then, the controller 101 causes the combustion air fan 2b to operate for a predetermined time after the power generation in the fuel cell 1 stops, thereby cooling the reformer 2 and exhausting uncombusted gas remaining in the burner 2a and passages (off-gas passage R2 connected to the burner 2a, or the like) in the vicinity of the burner 2a, to outside the fuel cell system 100.

Thereafter, as the temperature of the reformer 2 decreases, the temperature of the gas within the reformer 2 decreases, and the volume of the gas decreases, which could possibly cause a negative pressure to be generated within the reformer 2. For this reason, when the temperature of the reformer 2 becomes a temperature which is not higher than a predetermined temperature, the controller 101 opens the material gas valve 7 for a predetermined period of time on a regular basis. Thereby, the material gas is supplied to the reformer 2, which makes it possible to suppress the negative pressure from being generated in the reformer 2.

In the fuel cell 1, generation of reaction heat in the fuel cell 1 stops as a result of stop of power generation, and the steam contained in the fuel gas remaining in the fuel cell 1 is cooled and condensed into water, which could cause a negative pressure to be generated within the fuel cell 1. However, since the three-way valve 9 maintains the state where the fuel gas passage R1 and the fuel cell inlet passage R4 communicate with each other, a part of the material gas supplied to the reformer 2 is supplied to the fuel cell 1, thereby suppressing a negative pressure from being generated inside the fuel cell 1. At this time, the on-off valve 10 is kept closed and therefore, the material gas supplied to the reformer 2 and the fuel cell 1 and the fuel gas remaining there are not exhausted to outside the fuel cell system 100. For this reason, the supplied material gas does not become a waste.

Then, when the temperature of the reformer 2 further decreases, the controller 101 switches the three-way valve 9 to allow communication between the fuel gas passage R1 and the bypass passage R3 to discharge the steam from inside the reformer 2. At the same time, the controller 101 opens the material gas valve 7 for a predetermined period of time or until the amount of the material gas flowing reaches a predetermined amount (integrated flow rate), thereby allowing the material gas to flow through the reformer 2. As a result, the gas remaining within the reformer 2 and containing the steam is exhausted to outside the fuel cell system 100 via the burner 2a. At this time, the gas containing the steam may be combusted in the burner 2a.

At a time point when the predetermined time elapses or the amount of the material gas reaches the predetermined amount, the controller 101 closes the material gas valve 7, and stops supplying of the material gas. Thus, the shut-down operation of the fuel cell system 100 completes.

Alternatively, the three-way valve 9 may be switched to allow communication between the fuel gas passage R1 and the fuel cell inlet passage R4 for a predetermined period of time at predetermined time intervals to suppress a negative pressure from being generated inside the fuel cell 1, when the steam is discharged from inside the reformer 2. In that case, after the predetermined time elapses, the three-way valve 9 may be switched to allow communication between the fuel gas passage R1 and the bypass passage R3, and discharging of the steam from inside the reformer 2 continues until the conditions for completing the operation for discharging the steam from inside the reformer 2 is satisfied (i.e., the predetermined time elapses or the amount of the material gas reaches the predetermined amount).

Thus, during the shut-down operation of the fuel cell 1, since the material gas is supplied to the fuel cell 1 on a regular basis with the on-off valve 10 being closed, the fuel cell 1 is filled with the material gas. Also, the steam in the remaining fuel gas is condensed into water, which is left in the fuel cell 1.

Therefore, at the start-up of the fuel cell 1, when supplying of the fuel gas to the fuel cell 1 starts, the controller 101 controls the three-way valve 9 such that the fuel gas is supplied discontinuously to the fuel cell 1. By such control, it is possible to suppress the air-fuel ratio in the burner 2a from getting deviated and combustion from becoming unstable, which would be caused by supplying the material gas remaining in the fuel cell 1 to the burner 2a. In addition, it is possible to suppress a misfire in the burner 2a, which would be caused by supplying the condensed water staying in the fuel cell 1 continuously to the burner 2a in the reformer 2.

Although according to the control flow shown in Figs. 2 and 3, in the fuel cell system 100 of Embodiment 1, both of the three-way valve 9 and the on-off valve 10 are operated together to switch the gas passage from the gas passage A to the gas passage B, after step S2, the present invention is not limited to this. For example, when performing step S2 at first time, the controller 101 opens the on-off valve 10, and then operates only the three-way valve 9 without closing the on-off valve 10, such that the switching between the gas passage A and the gas passage B is performed with the on-off valve 10 being kept open, in step S4. Because of this, the passage switching between the gas passage A and the gas passage B is accomplished merely by the passage switching operation of the three-way valve 9. Therefore, an influence of a difference in the valve operation can be lessened as compared to a case where the three-way valve 9 and the on-off valve 10 are operated together. In addition, electric power consumption corresponding to the valve operation of the on-off valve 10 does not occur.

Although in the fuel cell system 100 according to Embodiment 1, the on-off valve 10 is disposed on the fuel cell outlet passage R5, the present invention is not limited to this. The on-off valve 10 may be disposed on the off-gas passage R2. In this case, the switching between the gas passage A and the gas passage B is performed by using only the three-way valve 9.

### (Embodiment 2)

Subsequently, a configuration of a fuel cell system according to Embodiment 2 of the present invention will be described with reference to the drawings.

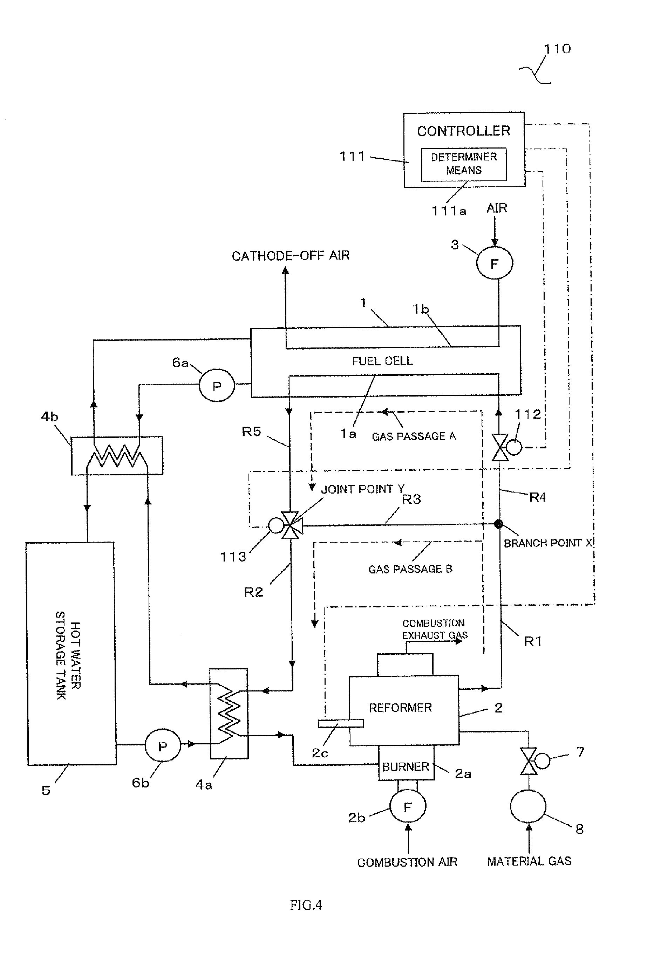

Fig. 4 is a schematic view showing a configuration of the fuel cell system according to Embodiment 2 of the present invention. Referring to Fig. 4, solid lines connecting components constituting the fuel cell system indicate passages through which water, fuel gas, oxidizing gas, etc., flow, like those shown in Fig. 1. Arrows depicted on these solid lines indicate directions in which the water, the fuel gas, the oxidizing gas, etc., flow, during normal operation. One-dotted lines connecting the components indicate input/output operation of control signals. In Fig. 4, only the components required to explain the present invention are depicted, and other components are omitted. In Fig. 4, the same components as those in the fuel cell system 100 of Embodiment 1 are designated by the same reference symbols.

Referring to Fig. 4, a fuel cell system 110 of Embodiment 2 has a configuration which is substantially the same as that of the fuel cell system 100 according to Embodiment 1. The configuration of the fuel cell system 110 of Embodiment 2 is different from the configuration of the fuel cell system 110 of Embodiment 1 in that an on-off valve 112 is disposed on the fuel cell inlet passage R4 and a three-way valve 113 is disposed at a joint point Y, instead of the three-way calve 9 and the on-off valve 110 in the fuel cell system 100 of Embodiment 1. In other words, the on-off valve 112 provided on the fuel cell inlet passage R4 and the three-way valve 113 provided on the joint point Y correspond to the passage switching means. The other components are similar to those of the fuel cell system 100 of Embodiment 1.

The three-way valve 113 is controlled by a controller 111 and is capable of performing switching as desired at least between a state where the fuel cell outlet passage R5 and the off-gas passage R2 communicate with other and a state where the bypass passage R3 and the off-gas passage R2 communicate with each other.

As described above, in the fuel cell system 110 according to Embodiment 2, the three-way valve 113 is switched to allow the fuel cell outlet passage R5 and the off-gas passage R2 to communicate with each other, and the on-off valve 112 is opened, thereby forming the gas passage A including the fuel gas passage R1, the fuel cell inlet passage R4, the anode passage 1a, the fuel cell outlet passage R5 and the off-gas passage R2. The three-way valve 113 is switched to allow the bypass passage R3 and the off-gas passage R2 to communicate with each other, thereby forming the gas passage B including the fuel gas passage R1, the bypass passage R3 and the off-gas passage R2. Furthermore, the on-off valve 112 is closed and the three-way valve 9 is switched to allow the bypass passage R3 and the off-gas passage R2 to communicate with each other, thereby sealing the anode passage 1a of the fuel cell 1, and the passages (portion of the fuel cell inlet passage R4 which is downstream of the on-off valve 112 and the fuel cell outlet passage R5) in the vicinity of the anode passage 1a.

Next, the operation of the fuel cell system 110 according to Embodiment 2 of the present invention will be described with reference to the drawings.

Hereinafter, it is assumed that the anode passage 1a of the fuel cell 1, and the passages in the vicinity of the anode passage 1a are filled preliminarily with the material gas containing an organic compound composed at least carbon and hydrogen, by a pressure keeping operation of a shut-down operation as described later, in the start-up operation of the fuel cell system 110. Filling of the material gas into the anode passage 1a of the fuel cell 1, and the passages in the vicinity of the anode passage 1a is performed by supplying the material gas from the material gas supplier 8 of Fig. 4 to the anode passage 1a of the fuel cell 1, and the passages in the vicinity of the anode passage 1a.
In the fuel cell system 110 according to Embodiment 2, the natural gas is used as the material gas.

The fuel cell system 110 operates as follows under control of the controller 111.

When the start-up operation of the fuel cell system 110 of Fig. 4 starts, the reformer 2 is operated to generate the hydrogen-rich fuel gas required for power generation in the fuel cell 1, like the fuel cell system 100 of Embodiment 1.

At the start-up operation of the fuel cell system 110, the controller 101 switches the three-way valve 113 to allow the off-gas passage R2 to communicate with the bypass passage R3 (three-way valve 113 is operated to allow communication between the off-gas passage R2 and the bypass passage R3 and the fuel cell outlet passage R5 is blocked), and closes the on-off valve 112, to form the gas passage B, until the temperature of the reforming catalyst in the reformer 2 reaches a predetermined temperature and the reformer 2 is able to generate a fuel gas with a good quality, the carbon monoxide concentration of which has been lowered sufficiently (until a predetermined operation condition is met), in order to prevent the fuel gas with a high carbon monoxide concentration from entering the fuel cell 1, like the fuel cell system 100 of Embodiment 1. Then, the fuel gas containing carbon monoxide with a high concentration which is generated in the reformer 2 is supplied to the gas passage B, and supplied to the burner 2a via the gas passage B.

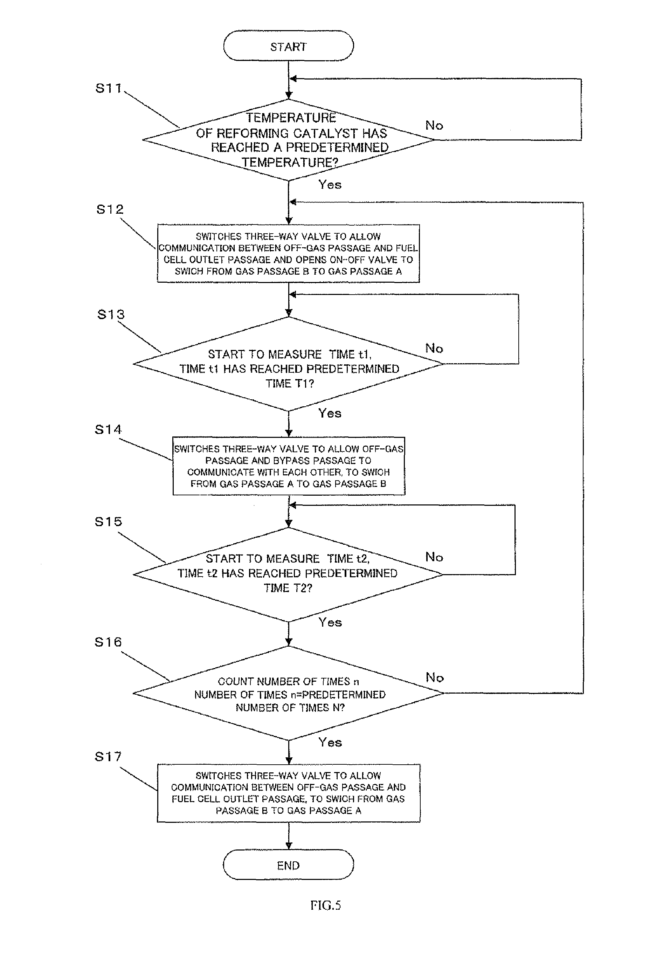

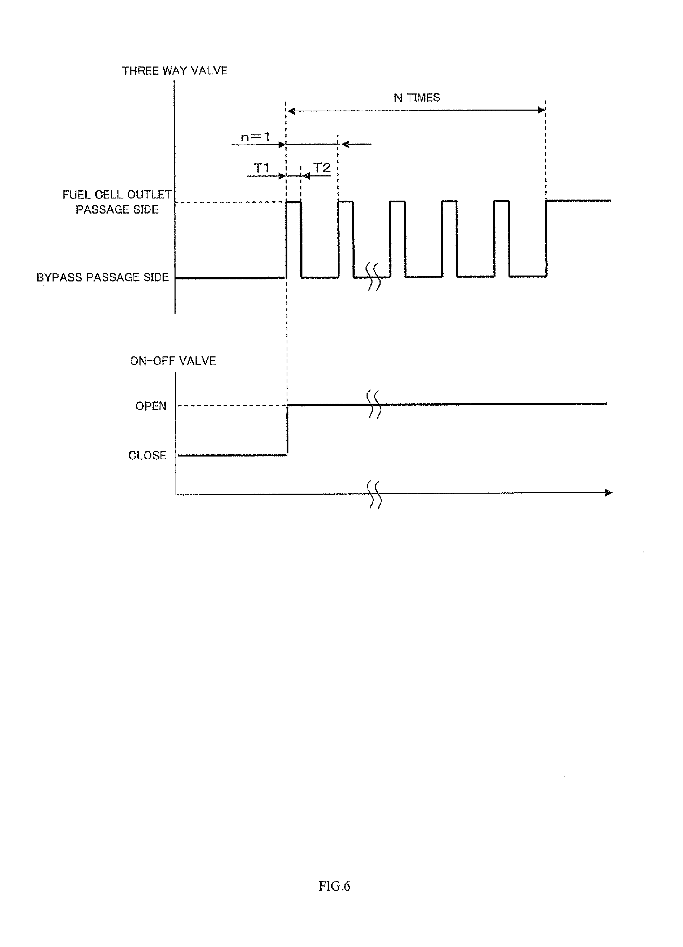

The operation which takes place thereafter will be described in detail with reference to Figs. 5 and 6 to explain the present invention more specifically.

Fig. 5 is a flowchart schematically showing a part of the operation of the fuel cell system according to Embodiment 2 of the present invention. Fig. 6 is a timing chart correlatively showing a state of a valve in a flow of the operation of Fig. 5.

As shown in Figs. 5 and 6, when the temperature of the reforming catalyst in the reformer 2 increases by the heat generated by combustion of the fuel gas containing carbon monoxide with a high concentration in the burner 2a, the controller 111 determines whether or not the temperature of the reforming catalyst has reached a predetermined temperature suitable for the steam reforming reaction (step S11).
If the controller 101 determines that the temperature of the reforming catalyst has not reached the predetermined temperature yet (No in step S11), the burner 2a continues to heat the reforming catalyst until the controller 111 determines that the temperature of the reforming catalyst has reached the predetermined temperature.

On the other hand, if the controller 111 determines that the temperature of the reforming catalyst has reached the predetermined temperature (YES in step S11), the controller 111 switches the three-way valve 113 to allow the off-gas passage R2 to communicate with the fuel cell outlet passage R5 (three-way valve 113 is operated to allow the off-gas passage R2 and the fuel cell outlet passage R5 to communicate with each other and the bypass passage R3 is blocked), and opens the on-off valve 112 at the same time (step S12). Thereby, the gas passage is switched from the gas passage B to the gas passage A, and introduction of the fuel gas generated in the reformer 2 into the fuel cell 1 starts.

Then, the controller 111 starts to measure time t1 that elapses from when the valve is operated in step S12 (step S13). Before the time t1 reaches a predetermined time (predetermined period of time) T1 (minutes) as described later (NO in step S13), the three-way valve 113 maintains the state where off-gas passage R2 and the fuel cell outlet passage R5 communicate with each other, and the on-off valve 112 is kept open.

If the controller 111 determines that the time t1 has reached the predetermined time T1 (minutes) (YES in step S13), the three-way valve 113 is switched to allow the off-gas passage R2 and the bypass passage R3 to communicate with each other (step S14). Thereby, the passage through which the fuel gas flows is switched from the gas passage A to the gas passage B, and the fuel gas is supplied to the burner 2a via the bypass passage R3 and the off-gas passage R2. At this time, the on-off valve 112 is kept open, but the fuel cell outlet passage R5 is closed by the three-way valve 113, and therefore the fuel gas does not flow therethrough. Alternatively, the on-off valve 112 may be closed at the same time that the three-way valve 113 is switched to allow communication between the off-gas passage R2 and the bypass passage R3.

Then, the controller 111 starts to measure a time t2 that elapses from when the valve is operated in step S14 (step S15). If the controller 111 determines that the time t2 does not reach the predetermined time T2 (minutes) (NO in step S15), the three-way valve 113 maintains a state where the off-gas passage R2 and the bypass passage R3 communicate with each other, so that the state where the gas passage B is formed is maintained.

Then, if the controller 101 determines that the time t2 has reached the predetermined time T2 (minutes) (YES in step S15), the controller 111 counts the number of times n a series of steps from step S12 to step S15 are performed (step S16). If the counted number of times n is less than a predetermined number of times N (NO in step S16), the controller 111 returns the process to step S12, and repeats the operation from step S12 to step S16. The predetermined number of times N is set as in the case of the predetermined number of times N described regarding the fuel cell system 100 according to Embodiment 1.

When the number of times n counted by the controller 111 is equal to the predetermined number of times N (YES in step S 16), the controller 111 switches the three-way valve 113 to allow the off-gas passage R2 and the fuel cell outlet passage R5 to communicate with other (step S 17). That is, only the gas passage A is formed and the fuel gas is introduced continuously to the fuel cell 1. The operation after step S17 is identical to that described in Embodiment 1.

Now, detailed description will be given of a behavior of the fuel cell system 110 of Embodiment 2 from step S12 in Fig. 5 until a next valve operation, which is a feature of the start-up operation of the fuel cell system 110 of embodiment 2.

Like the fuel cell system 100 of Embodiment 1, the fuel gas flows through the gas passage A , and the material gas is purged by the fuel gas, from when step S12 is performed until next valve operation occurs (process goes through step S 15 and step S16 and returns to step S12), but it is possible to suppress the air-fuel ratio in the burner 2a from getting deviated by setting the predetermined time T1 to a sufficiently short one.

Next, description will be given of the shut-down operation of the fuel cell system 110. In the shut-down operation of the fuel cell system 110, firstly, the controller 111 causes the power generation controller to stop supplying of the electric power to an external power load, and stops the material gas supplier 8 and the blower 3. Thus, the power generation in the fuel cell 1 is stopped. Thereafter, the controller 111 closes both of the material gas valve 7 and the on-off valve 112. The controller 111 switches the three-way valve 113 to allow communication between the off-gas passage R2 and the bypass passage R3.

The controller 111 operates the combustion air fan 2b for a predetermined period of time after the power generation in the fuel cell 1 stops, thereby cooling the reformer 2 and exhausting uncombusted gas remaining in the burner 2a and passages in the vicinity of the burner 2a to outside the fuel cell system 110.

Thereafter, as the temperature of the reformer 2 decreases, the temperature of the gas within the reformer 2 decreases, and the volume of the gas decreases, which could possibly cause a negative pressure to be generated within the reformer 2. For this reason, when the temperature of the reformer 2 becomes a temperature which is not higher than a predetermined temperature, the controller 111 opens the material gas valve 7 for a predetermined period of time on a regular basis. Thereby, the material gas is supplied to the reformer 2 and it is possible to prevent the negative pressure from being generated in the reformer 2.

In the fuel cell 1, generation of reaction heat in the fuel cell 1 stops as a result of stop of power generation, and the steam contained in the fuel gas remaining in the fuel cell 1 is cooled and condensed into water, which could possibly cause a negative pressure to be generated within the fuel cell 1. For this reason, the controller 110 opens the on-off valve 112 once of plural times the material gas valve 7 is opened, thereby suppressing a negative pressure from being generated inside the fuel cell 1. At this time, the three-way valve 113 maintains a state where the off-gas passage R2 and the bypass passage R3 communicate with each other. Therefore, the material gas supplied to the fuel cell 1 or the fuel gas remaining in the fuel cell 1 are not exhausted to outside the fuel cell system 100.

Then, when the temperature of the reformer 2 further decreases, the controller 111 opens the material gas valve 7 for a predetermined period of time or until the amount of the material gas flowing reaches a predetermined amount, thereby allowing the material gas to flow through the reformer 2. As a result, the gas remaining within the reformer 2 and containing the steam is exhausted to outside the fuel cell system 110 via the burner 2a. At this time, combustion air may be supplied to the burner 2a to combust the gas containing the steam in the burner 2a.

In general, during power generation operation of the fuel cell system 110, the reformer 2 is operating at a higher temperature than the fuel cell 1, and therefore the fuel cell 1 is cooled more quickly than the reformer 2 in the shut-down operation. For this reason, normally, in this stage, a negative pressure is not generated in the fuel cell 1, and the fuel cell inlet valve 112 is closed. Nonetheless, if a negative pressure is generated within the fuel cell 1, the on-off valve 112 is preferably opened for a predetermined period of time on a regular basis, thereby suppressing a negative pressure from being generated within the fuel cell 1.

When the predetermined time elapses or the amount of the material gas supplied reaches the predetermined amount after the operation for discharging the steam from inside the reformer 2 starts, the controller 111 closes the material gas valve 7 and completes purging of the reformer 2.

As described above, during the shut-down operation of the fuel cell system 110, since the material gas is supplied to the fuel cell 1 on a regular basis with the on-off valve 112 being closed, the fuel cell 1 is filled with the material gas. Also, the steam in the fuel gas remaining within the fuel cell 1 is condensed into water, which is left there.

Therefore, at the start-up of the fuel cell system 110, when supplying of the fuel gas to the fuel cell 1 starts, the controller 111 controls the on-off valve 112 such that the fuel gas is supplied discontinuously to the fuel cell 1. By such control, it is possible to suppress the air-fuel ratio in the burner 2a from getting deviated and combustion from becoming unstable, which would be caused by supplying the material gas remaining in the fuel cell 1 to the burner 2a. In addition, it is possible to suppress a misfire in the burner 2a, which would be caused by supplying the condensed water staying in the fuel cell 1 continuously to the burner 2a in the reformer 2.

As described above, in accordance with the fuel cell system 110 according to Embodiment 2, the material gas filled in the fuel cell 1 and the passages in the vicinity of the fuel cell 1 can be diluted and purged to the burner 2a, by performing the valve operation of only the three-way valve 113. Therefore, it is possible to surely suppress imperfect combustion without considering a difference in operation timing between the on-off valve 112 and the three-way valve 113.

### (Embodiment 3)

Subsequently, a configuration of a fuel cell system according to Embodiment 3 of the present invention will be described with reference to the drawings.

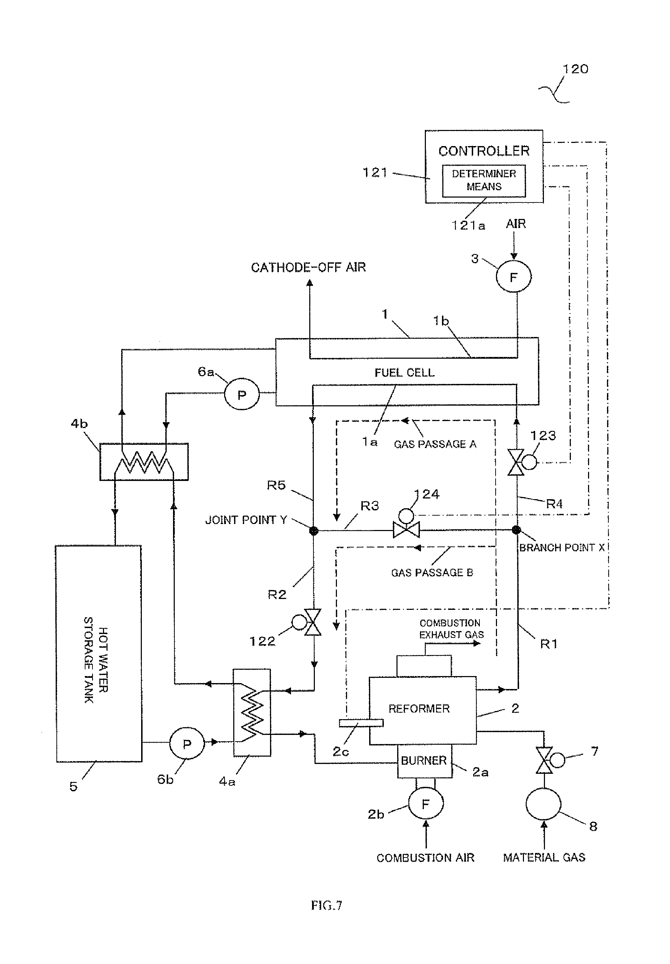

Fig. 7 is a schematic view showing a configuration of the fuel cell system according to Embodiment 3 of the present invention. Referring to Fig. 7, solid lines connecting components constituting the fuel cell system indicate passages through which water, fuel gas, oxidizing gas, etc., flow, like those shown in Figs. 1 and 4. Arrows depicted on these solid lines indicate directions in which the water, the fuel gas, the oxidizing gas, etc., flow, during normal operation. One-dotted lines connecting the components indicate input/output operation of control signals. In Fig. 7, only the components required to explain the present invention are depicted, and other components are omitted. In Fig. 7, the same components as those in the fuel cell system 100 of Embodiment 1 are designated by the same reference symbols.

Referring to Fig. 7, a fuel cell system 120 according to Embodiment 3 has a configuration which is substantially the same as that of the fuel cell system 100 according to Embodiment 1. The configuration of the fuel cell system 120 according to Embodiment 3 is different from the configuration of the fuel cell system 100 according to Embodiment 1 in that a fuel cell inlet valve 123 which is an on-off valve is provided on the fuel cell inlet passage R4 and a bypass valve 124 which is an on-off valve is provided on the bypass passage R3, instead of the three-way valve 9 and the on-off valve 10 in the fuel cell system 100 of Embodiment 1. That is, the fuel cell inlet valve 123 and the bypass valve 124 correspond to the passage switching means. In addition, the configuration of the fuel cell system 120 according to Embodiment 3 is different from the configuration of the fuel cell system 100 according to Embodiment 1 in that an on-off valve 122 is provided on the off-gas passage R2 to seal the anode passage 1a of the fuel cell 1 when the fuel cell system 120 is shut-down. The other components in the fuel cell system 120 are identical to those of the fuel cell system 100 of Embodiment 1.

The fuel cell inlet valve 123 and the bypass valve 124 are controlled by a controller 121. By opening the fuel cell inlet valve 123 and by closing the bypass valve 124 (maintaining the closed state of the bypass valve 124), the gas passage A is formed to include the fuel gas passage R1, the fuel cell inlet passage R4, the anode passage 1a, the fuel cell outlet passage R5 and the off-gas passage R2, while by opening the bypass valve 124 and closing the fuel cell inlet valve 123 (maintaining the closed state of the fuel cell inlet valve 123), the gas passage B is formed to include the fuel gas passage R1, the bypass passage R3 and the off-gas passage R2.

The on-off valve 122 is controlled by the controller 121 and is opened when the gas is flowed through the off-gas passage R2. The on-off valve 122, the fuel cell inlet valve 123, and the bypass valve 124 are closed, thereby sealing the anode passage 1a of the fuel cell 1 and the passages (in the present embodiment, portion of the fuel cell inlet passage R4 connected to the anode passage 1a, which portion is downstream of the on-off valve 123, the fuel cell outlet passage R5 connected to the anode passage 1a, a portion of the bypass passage R3 which is downstream of the bypass valve 124, and a portion of the off-gas passage R2 which is upstream of the on-off valve 122) in the vicinity of the anode passage 1a.

The controller 121 properly controls the operation of the components in the fuel cell system 120. Programs relating to the operation of the components in the fuel cell system 120 are pre-stored in the memory section of the controller 121. Based on the programs stored in the memory section, the controller 121 properly controls the operation of the fuel cell system 120.

The controller 121 includes a determiner means 121a for determining the kind of the material gas, and performs control based on a program corresponding to each material gas pre-stored, depending on the kind of the material gas. As the determiner means for determining the kind of the material gas, there is a method in which a user or operator selects and sets in software the kind of gas supplied to the fuel cell system by an interface such as a remote controller, or a method in which the user or operator manually selects and sets the kind of gas supplied to the fuel cell system in hardware by a switch, or the like to identify the kind of the gas, before operating the fuel cell system. In another method, for example, a predetermined amount of material gas is combusted in the burner 2a for a predetermined time, a temperature increase due to combustion heat is detected and is compared to a threshold of a temperature increase of each kind of gas pre-stored in the controller 121 to identify the kind of the material gas automatically.

Next, the operation of the fuel cell system 120 according to Embodiment 3 of the present invention will be described with reference to the drawings.

In description below, it is assumed that during start-up operation of the fuel cell system 120, the anode passage 1a of the fuel cell 1 and the passages in the vicinity of the anode passage 1a are filled preliminarily with the material gas including an organic compound composed at least carbon and hydrogen. Filling of the material gas into the anode passage 1a of the fuel cell 1 and the passages in the vicinity of the anode passage 1a is performed by supplying the material gas to the anode passage 1a of the fuel cell 1 and the passages in the vicinity of the anode passage 1a by using the material gas supplier 8 shown in Fig. 7. In the fuel cell system 120 according to Embodiment 3, the natural gas is used as the material gas.

The fuel cell system 120 operates as follows under control of the controller 121.

When the start-up operation of the fuel cell system 120 of Fig. 7 starts, the reformer 2 is operated to generate the hydrogen-rich fuel gas required for power generation in the fuel cell 1, like the fuel cell system 100 of Embodiment 1.

At the start-up operation of the fuel cell system 120, the controller 121 closes the fuel cell inlet valve 123 and opens the bypass valve 124 to form the gas passage B, until the temperature of the reforming catalyst in the reformer 2 reaches a predetermined temperature and the reformer 2 is able to generate a fuel gas with a good quality, the carbon monoxide concentration of which has been lowered sufficiently (until a predetermined operation condition is met), in order to inhibit the fuel gas with a high carbon monoxide concentration from entering the fuel cell 1, like the fuel cell system 100 of Embodiment 1. Then, the fuel gas containing carbon monoxide with a high concentration which is generated in the reformer 2 is supplied to the gas passage B, and supplied to the burner 2a via the gas passage B. At this time, the controller 121 opens the on-off valve 122 as described above.

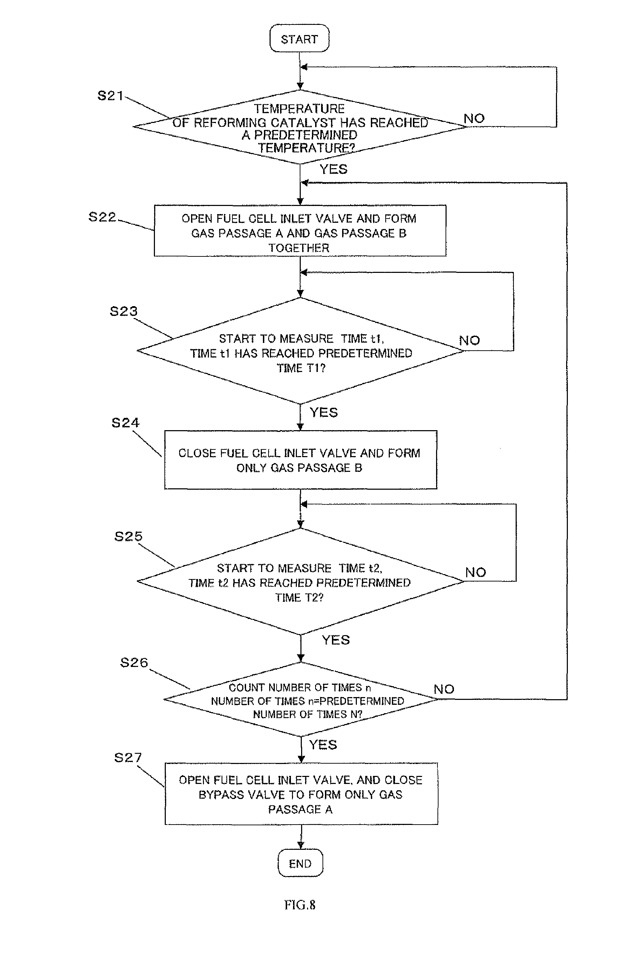

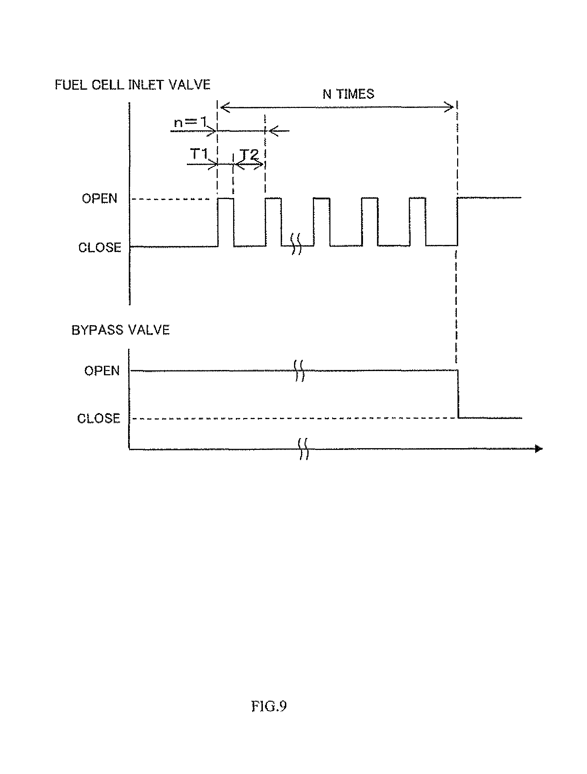

The operation which takes place thereafter will be described in detail with reference to Figs. 8 and 9 to explain the present invention more specifically.

Fig. 8 is a flowchart schematically showing a part of the operation of the fuel cell system according to Embodiment 3 of the present invention. Fig. 9 is a timing chart correlatively showing a state of a valve in a flow of the operation of Fig. 8.

As shown in Figs. 8 and 9, when the temperature of the reforming catalyst in the reformer 2 increases by the heat generated by combustion of the fuel gas containing carbon monoxide with a high concentration in the burner 2a, the controller 121 determines whether or not the temperature of the reforming catalyst has reached a predetermined temperature suitable for the steam reforming reaction (step S21). If the controller 121 determines that the temperature of the reforming catalyst has not reached the predetermined temperature yet (No in step S21), the burner 2a continues to heat the reforming catalyst until the controller 121 determines that the temperature of the reforming catalyst has reached the predetermined temperature.

On the other hand, if the controller 121 determines that the temperature of the reforming catalyst has reached the predetermined temperature in step S21 (YES in step S21), the controller 121 opens the fuel cell inlet valve 123 (step S22). At this time, the bypass valve 124 is kept open. Thereby, the gas passage A and the gas passage B are formed together, and a part of the fuel gas generated in the reformer 2 is introduced into the fuel cell I . The fuel gas purges the material gas from the anode passage 1a of the fuel cell 1 and the passages in the vicinity of the anode passage 1a, and is mixed with the remaining fuel gas supplied to the bypass passage R3 side, and the resulting mixture is supplied to the burner 2 and combusted therein.

Then, the controller 121 starts to measure time t1 that elapses from when the valve is operated in step S22 (step S23). Before the time t1 reaches a predetermined time T1 (minutes) as described later (NO in step S23), the controller 121 maintains a state where the fuel cell inlet 123 and the bypass valve 124 are open.

If the controller 121 determines that the time t1 has reached the predetermined time T1 (minutes) (YES in step S23), the controller 121 closes the fuel cell inlet valve 123 (step S24). That is, the controller 121 switches the state where both of the gas passage A and the gas passage B are formed together to the state where only the gas passage B is formed (the state where the gas passage A is not formed but the gas passage B is formed is maintained), stops introduction of the fuel gas to the fuel cell inlet passage R4. As a result, the fuel gas is supplied to the burner 2a only via the bypass passage R3.

Then, the controller 121 starts to measure a time t2 that elapses from when the valve is operated in step S24 (step S25). If the controller 121 determines that the time t2 does not reach the predetermined time T2 (minutes) (NO in step 25), the controller 121 maintains a state where only the gas passage B is formed.

Then, if the controller 121 determines that the time t2 has reached the predetermined time T2 (minutes) (YES in step S25), the controller 121 counts the number of times n a series of steps from step S22 to step S25 are performed (step S26). If the counted number of times n is less than a predetermined number of times N as described later (NO in step S26), the controller 121 returns the process to step S22, and repeats step S22 to step S26.

When the number of times n counted by the controller 121 is equal to the predetermined number of times N described later (YES in step S26), the controller 121 opens the fuel cell inlet valve 123 and closes the bypass valve 124 concurrently (step S27). In other words, only the gas passage A is formed (the gas passage B is not formed and only the gas passage A is formed), and in this state, the fuel gas is introduced continuously to the fuel cell 1. The operation after step S27 is identical to that described in Embodiment 1.

Next, shut-down operation of the fuel cell system 120 will be described. In the shut-down operation of the fuel cell system 120, initially, the controller 121 causes the power generation controller to stop supplying of the electric power to an external power load, and stops the material gas supplier 8 and the blower 3. Thus, the power generation in the fuel cell 1 is stopped. Then, the controller 121 closes both of the material gas valve 7 and the on-off valve 122. Also, the controller 121 maintains a state where the fuel cell inlet valve 123 is kept open, and the bypass valve 124 is kept closed. At this time, the fuel cell inlet valve 123 is not necessarily opened.

Then, the controller 121 operates the combustion air fan 2b for a predetermined time after the power generation in the fuel cell 1 stops, thereby cooling the reformer 2 and exhausting uncombusted gas remaining in the burner 2a and the passages in the vicinity of the burner 2a, to outside the fuel cell system 120.

After that, when the temperature of the reformer 2 decreases to a predetermined temperature, the controller 121 closes the fuel cell inlet valve 123. As the temperature of the reformer 2 decreases, the temperature of the gas within the reformer 2 decreases, and the volume of the gas decreases, which could possibly cause a negative pressure to be generated within the reformer 2. For this reason, when the temperature of the reformer 2 becomes a temperature which is not higher than a predetermined temperature, the controller 121 opens the material gas valve 7 for a predetermined period of time on a regular basis. Thereby, the material gas is supplied to the reformer 2, which makes it possible to suppress a negative pressure from being generated in the reformer 2.

In the fuel cell 1, generation of reaction heat in the fuel cell 1 stops as a result of stop of power generation, and the steam contained in the fuel gas remaining in the fuel cell 1 is cooled and condensed into water, which could possibly cause a negative pressure to be generated within the fuel cell 1. To avoid this, the controller 121 opens the fuel cell inlet valve 123 once of plural times the material gas valve 7 is opened, for a predetermined period of time on a regular basis, thereby suppressing a negative pressure from being generated within the fuel cell 1. At this time, the on-off valve 122 is kept closed and therefore, the material gas supplied to the reformer 2 and the fuel cell 1 and the fuel gas remaining there are not exhausted to outside the fuel cell system 120. Therefore, the supplied material gas does not become a waste.

Then, when the temperature of the reformer 2 further decreases, the controller 121 opens the bypass valve 124 and the on-off valve 122 to discharge the steam from inside the reformer 2. At the same time, the controller 121 opens the material gas valve 7 for a predetermined period of time or until the amount of the material gas flowing reaches a predetermined amount, thereby allowing the material gas to flow through the reformer 2. As a result, the gas remaining within the reformer 2 and containing the steam is exhausted to outside the fuel cell system 120 via the burner 2a. At this time, the gas containing the steam may be combusted in the burner 2a.

In general, during power generation operation of the fuel cell system 120, the reformer 2 is operating at a higher temperature than the fuel cell 1, and therefore the fuel cell 1 is cooled more quickly than the reformer 2 in the shut-down operation. For this reason, in normal cases, in this stage, a negative pressure is not generated within the fuel cell 1, and the fuel cell inlet valve 123 is closed. Nonetheless, if a negative pressure is generated within the fuel cell 1, the controller 121 may open the fuel cell inlet valve 123 for a predetermined period of time on a regular basis.

When the predetermined time elapses or the amount of the material gas supplied reaches the predetermined amount after the operation for discharging the steam from inside the reformer 2 starts, the controller 121 closes the material gas valve 7, the on-off valve 122 and the bypass valve 124.

As described above, during the shut-down operation of the fuel cell system 120, since the material gas is supplied to the fuel cell 1 on a regular basis with the on-off valve 122 being closed, the fuel cell 1 is filled with the material gas. Also, the steam in the fuel gas remaining within the fuel cell 1 is condensed into water, which is left there.

Therefore, at the start-up of the fuel cell system 120, when supplying of the fuel gas to the fuel cell 1 starts, the controller 121 controls the fuel cell inlet valve 123 such that the fuel gas is supplied discontinuously to the fuel cell 1. By such control, it is possible to suppress the air-fuel ratio from getting deviated due to the material gas remaining within the fuel cell 1 and thereby combustion from becoming unstable. Also, it is possible to suppress occurrence of a misfire in the burner 2a, which would be caused by supplying the condensed water within the fuel cell 1 to the burner 2a continuously.

Now, description will be given of a behavior of the fuel cell system 120 of Embodiment 3 from step S22 in Fig. 8 until a next valve operation is performed, which is a feature of the start-up operation of the fuel cell system 120 of embodiment 3.

From step S22 to the next valve operation, the fuel gas flows through both of the gas passage A and the gas passage B. By adjusting a ratio between a pressure loss of the fuel cell 1 and a pressure loss of the bypass passage R3, it is possible to adjust a ratio between the fuel gas flowing to the gas passage A and the fuel gas flowing to the gas passage B, into which the fuel gas supplied through the fuel gas passage R1 is divided.

To be specific, when the flow rate of the natural gas supplied to the reformer 2 is Q(L/minutes), carbon dioxide of a flow rate of Q(L/minutes) and hydrogen of a flow rate of 4Q(L/minutes) are supplied from the reformer 2 according to the above formula (1). When a pressure loss of the anode passage 1a of the fuel cell 1 and the passages in the vicinity of the anode passage 1a is P1 and a pressure loss of the bypass passage P3 is P2, the flow rate Q1 (L/minutes) of the fuel gas supplied to the fuel cell 1 side is expressed as the above identified formula (5), and the natural gas of an equal amount is purged. On the other hand, the flow rate Q2 (L/minutes) of the fuel gas supplied to the off-gas passage R3 side is expressed as formula (7):

Q2=5Q × P1/(P1 +P2) (7)

As compared to the start-up operation of the fuel cell systems 100 and 110 according to Embodiment 1 and Embodiment 2, respectively, the natural gas filled in the fuel cell 1 and the passages in the vicinity of the fuel cell 1 and purged with a rate of Q1 (L/minutes) can be diluted in the off-gas passage R2 with the fuel gas supplied to the off-gas passage R2 with a rate of Q2(L/minutes) via the bypass passage R3 and the diluted natural gas is supplied to the burner 2a. This reduce a chance that the air-fuel ratio in the burner 2a will get deviated, and makes it possible to increase the predetermined time T1 for which imperfect combustion does not substantially occur. Since similar advantages are achieved using the on-off valve and passage control valve which operate at low speeds, cost can be reduced in the fuel cell system 120 of Embodiment 3.

The predetermined time T2 is set to a period of time which passes until an influence of the deviation of the air-fuel ratio which occurred for the predetermined time T1 is eradicated.

The predetermined number of times N is set to the number of times with which all of the natural gas filled in the fuel cell 1 and the passages in the vicinity of the fuel cell 1 is purged and supplied to the burner 2a. When the volume of the fuel cell 1 and the passages in the vicinity of the fuel cell 1 is V(L), the predetermined number of times N may be set to the number of times calculated according to the formula (8), because the volume of the natural gas purged each time is Q1 × T1 (L). Note that Q1 is calculated according to formula (5)

N = V / (Q1 × T1) (8)

Thus, all of the natural gas filled in the fuel cell 1 and the passages in the vicinity of the fuel cell 1 can be diluted and supplied to the burner 2a. As a result, at the start-up operation of the fuel cell system 120, combustion in the burner 2s is stabilized and emission of carbon monoxide can be suppressed.

### (Embodiment 4)

Subsequently, a configuration of a fuel cell system according to Embodiment 4 of the present invention will be described with reference to the drawings.

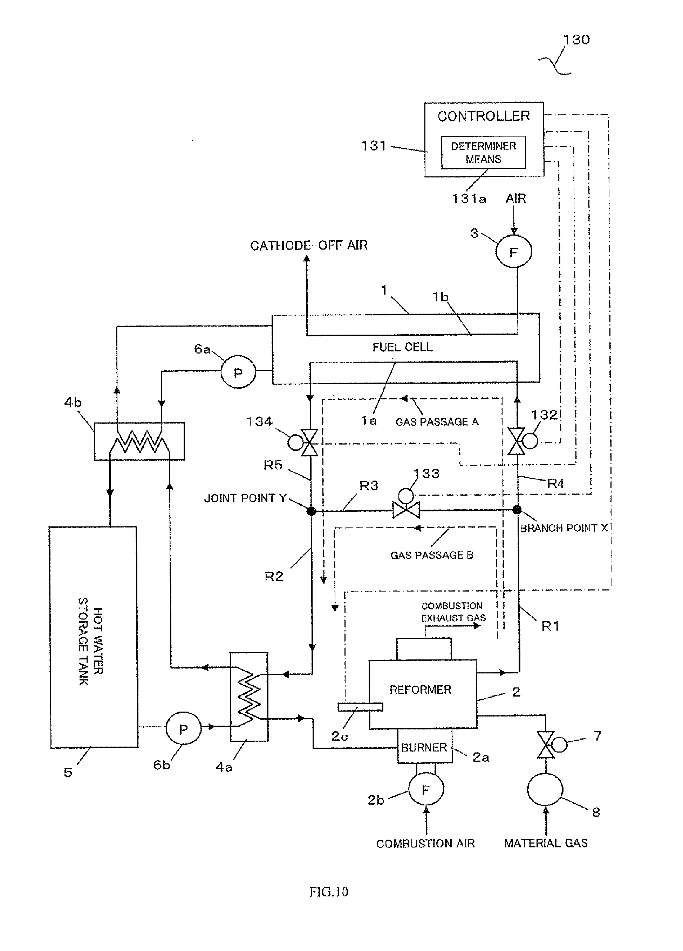

Fig. 10 is a schematic view showing a configuration of the fuel cell system according to Embodiment 4 of the present invention. Referring to Fig. 10, solid lines connecting components constituting the fuel cell system indicate passages through which water, fuel gas, oxidizing gas, etc., flow, like those shown in Figs. 1, 4 and 7. Arrows depicted on these solid lines indicate directions in which the water, the fuel gas, the oxidizing gas, etc., flow, during normal operation. One-dotted lines connecting the components indicate input/output operation of control signals. In Fig. 10, only the components required to explain the present invention are depicted, and other components are omitted. In Fig. 10, the same components as those in the fuel cell system 100 of Embodiment 1 are designated by the same reference symbols.

Referring to Fig. 10, a fuel cell system 130 of Embodiment 4 has a configuration which is substantially the same as that of the fuel cell system 100 according to Embodiment 1. The configuration of the fuel cell system 130 according to Embodiment 4 is different from the configuration of the fuel cell system 100 according to Embodiment 1 in that a fuel cell inlet valve 132 which is an on-off valve is provided on the fuel cell inlet passage R4 and a bypass valve 133 which is an on-off valve is provided on the bypass passage R3, instead of the three-way valve 9 in the fuel cell system 100 of Embodiment 1. That is, the fuel cell inlet valve 132 and the bypass valve 133 correspond to the passage switching means. Although the on-off valve is provided on the fuel cell outlet passage R5 like the on-off valve 10 in the fuel cell system 100 of Embodiment 1, description will be hereinafter given assuming that this is the fuel outlet valve 134. The other components in the fuel cell system 130 are identical to those of the fuel cell system 100 of Embodiment 1.

The fuel cell inlet valve 132, the bypass valve 133 and the fuel cell outlet valve 134 are controlled by the controller 131. The controller 131 opens the fuel cell inlet valve 132 and the fuel cell outlet valve 134 and closes the bypass valve 133 (maintains the closed state of the bypass valve 133), thereby forming the gas passage A including the fuel gas passage R1, the fuel cell inlet passage R4, the anode passage 1a, the fuel cell outlet passage R5 and the off-gas passage R2, while the controller 131 opens the bypass valve 133 and closes the fuel cell inlet valve 132 and the fuel cell outlet valve 134 (maintains the closed state of the fuel cell inlet valve 132 and the closed state of the fuel cell outlet valve 134), thereby forming the gas passage B including the fuel gas passage R1, the bypass passage R3 and the off-gas passage R2. The controller 131 closes the fuel cell inlet valve 132 and the fuel cell outlet valve 134, thereby sealing the anode passage 1a of the fuel cell 1 and the passages (in the present embodiment, portion of the fuel cell inlet passage R4 which is downstream of the fuel cell inlet valve 132, and portion of the fuel cell outlet passage R5 which is upstream of the fuel cell outlet valve 134) in the vicinity of the anode passage 1a.

The controller 131 properly controls the operation of the components in the fuel cell system 130. Programs relating to the operation of the components in the fuel cell system 130 are pre-stored in the memory section of the controller 131. Based on the programs stored in the memory section, the controller 131 properly controls the operation of the fuel cell system 130.

The controller 131 includes a determiner means 131a for determining a kind of the material gas, and performs control based on a program corresponding to each material gas pre-stored, depending on the kind of the material gas. As the determiner means for determining the kind of the material gas, there is a method in which a user or operator selects and sets in software the kind of gas supplied to the fuel cell system by an interface such as a remote controller, or a method in which the user or operator manually selects and sets the kind of gas supplied to the fuel cell system in hardware by a switch, or the like to identify the kind of the gas, before operating the fuel cell system. In another method, for example, a predetermined amount of material gas is combusted in the burner 2a for a predetermined time, a temperature increase due to combustion heat is detected and is compared to a threshold of a temperature increase of each kind of gas pre-stored in the controller 131 to identify the kind of the material gas automatically.

Next, the operation of the fuel cell system 130 according to Embodiment 4 of the present invention will be described with reference to the drawings.

Hereinafter, it is assumed that the anode passage 1a of the fuel cell 1, and the passages in the vicinity of the anode passage 1a are filled preliminarily with the material gas containing an organic compound composed at least carbon and hydrogen, in the start-up operation of the fuel cell system 130. Filling of the material gas into the anode passage 1a of the fuel cell 1, and the passages in the vicinity of the anode passage 1a, is performed by supplying the material gas from the material gas supplier 8 of Fig. 10 to the anode passage 1a of the fuel cell 1, and the passages in the vicinity of the anode passage 1a.

The fuel cell system 130 operates as follows under control of the controller 131.

When the start-up operation of the fuel cell system 130 of Fig. 10 starts, the reformer 2 is operated to generate the hydrogen-rich fuel gas required for power generation in the fuel cell 1, like the fuel cell system 100 of Embodiment 1. The controller 131 determines the kind of the material gas and starts the start-up operation by the program according to the kind of the material gas. The determination method of the material gas includes, for example, inputting the kind of the material gas, as described above.

At the start-up operation of the fuel cell system 130, the controller 131 closes the fuel cell inlet valve 132 and the fuel cell outlet valve 134 and opens the bypass valve 133 to form the gas passage B, until the temperature of the reforming catalyst in the reformer 2 reaches a predetermined temperature and the reformer 2 is able to generate a fuel gas with a good quality, the carbon monoxide concentration of which has been lowered sufficiently (until a predetermined operation condition is met), in order to prevent the fuel gas with a high carbon monoxide concentration from entering the fuel cell 1, like the fuel cell system 100 of Embodiment 1. Then, the fuel gas containing carbon monoxide with a high concentration which is generated in the reformer 2 is supplied to the gas passage B, and supplied to the burner 2a via the gas passage B.

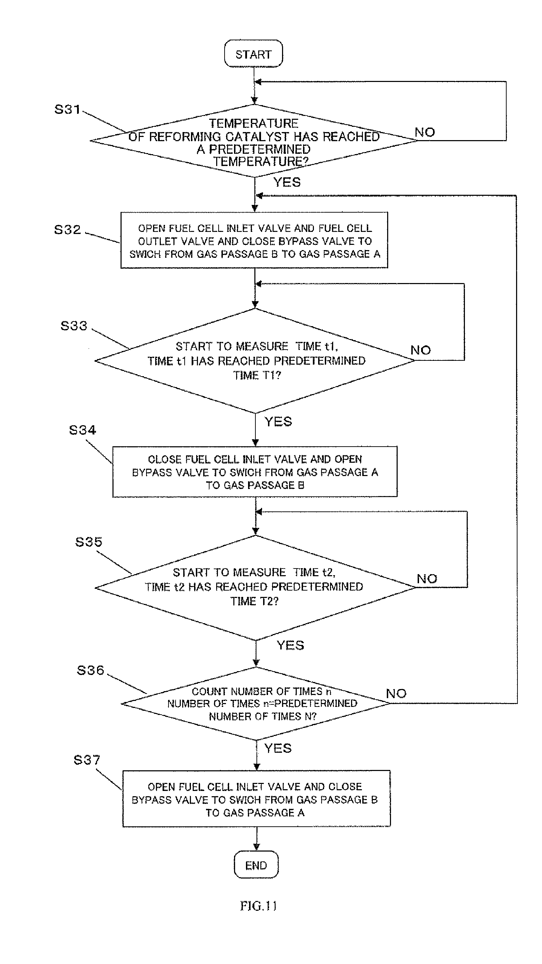

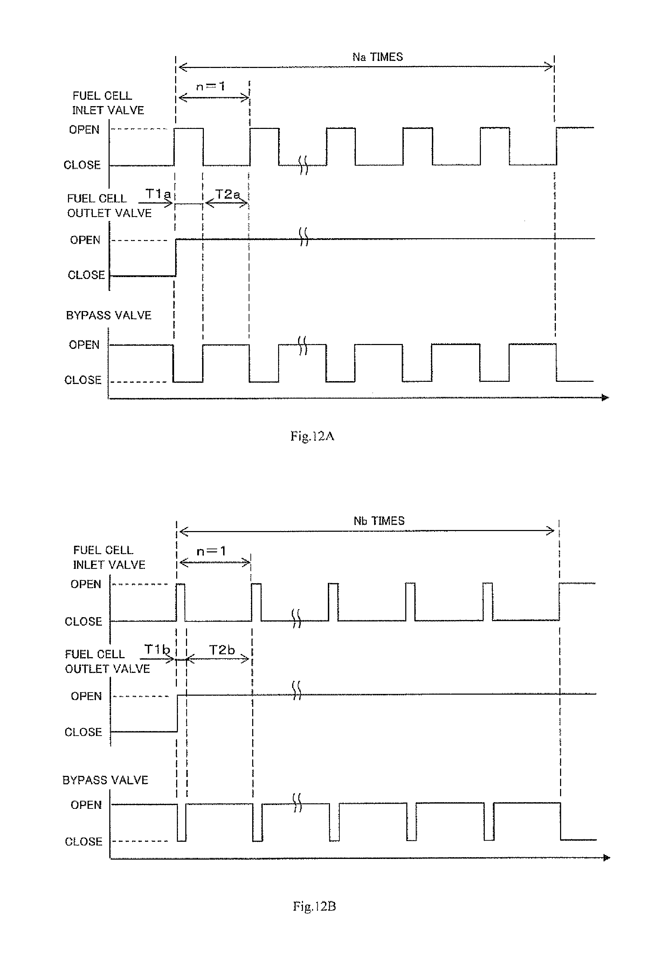

The operation which takes place thereafter will be described in detail with reference to Figs. 11 and 12 to explain the present invention more specifically.

Fig. 11 is a flowchart schematically showing a part of the operation of the fuel cell system according to Embodiment 4 of the present invention. Fig. 12A is a timing chart correlatively showing a state of a valve in a flow of the operation of Fig. 11. Fig. 12B is a timing chart correlatively showing a state of a valve in a flow of the operation of Fig. 11. Fig. 12A shows a case where the material gas is the natural gas and Fig. 12B shows a case where the material gas is LPG.

As shown in Figs. 11, 12A and 12B, when the temperature of the reforming catalyst in the reformer 2 increases by the heat generated by combustion of the fuel gas containing carbon monoxide with a high concentration in the burner 2a, the controller 131 determines whether or not the temperature of the reforming catalyst has reached a predetermined temperature suitable for the steam reforming reaction (step S31). If the controller 131 determines that the temperature of the reforming catalyst has not reached the predetermined temperature yet (NO in step S31), the burner 2a continues to heat the reforming catalyst until the controller 131 determines that the temperature of the reforming catalyst has reached the predetermined temperature.

On the other hand, if the controller 131 determines that the temperature of the reforming catalyst has reached the predetermined temperature (YES in step S31), the controller 131 opens the fuel cell inlet valve 132 and the fuel cell outlet valve 134, and closes the bypass valve 132 at the same time (step S32). Thereby, the passage is switched from the gas passage B to the gas passage A, and introduction of the fuel gas generated in the reformer 2 to the fuel cell 1 starts. Thereupon, the material gas is purged by the fuel gas, from the anode passage 1a of the fuel cell 1 and the passages in the vicinity of the anode passage 1a.

Then, the controller 131 starts to measure time t1 that elapses from when the valve is operated in step S32 (step S33). Before the time t1 reaches a predetermined time T1 (minutes) as described later (NO in step S33), the controller 131 maintains a state where the fuel cell inlet valve 132 and the fuel cell outlet valve 134 are open and a state where the bypass valve 133 is closed.

If the controller 131 determines that the time t1 has reached the predetermined time T1 (minutes) (YES in step S33), the controller 131 closes the fuel cell inlet valve 132 and opens the bypass valve 133 at the same time (step S34). Thereby, the gas passage is switched from the gas passage A to the gas passage B, so that purging of the material gas and the condensed water from the anode passage 1 a of the fuel cell 1 and the passages stops, and the fuel gas is supplied to the burner 2a.

Then, the controller 131 starts to measure a time t2 that elapses from when the valve is operated in step S34 (step S35). If the controller 131 determines that the time t2 does not reach the predetermined time T2 (minutes) (NO in step S35), the controller 131 maintains a state where the gas passage B is formed.

Then, if the controller 131 determines that the temperature t2 has reached the predetermined time T2 (minutes) (YES in step S35), the controller 131 counts the number of times n a series of steps from step S32 to step S35 are performed (step S36). If the counted number of times n is less than a predetermined number of times N (NO in step S36), the controller 131 returns the process to step S32 and repeats the operation from step S32 to step S36. Note that if the process returns from step S36 to step S32, the control for opening the fuel cell outlet valve 134 is not necessary in step S32 which is performed for the second and following time, because the fuel cell outlet valve 134 is kept open, but no problem arises if the controller 131 issues an opening command to the fuel cell outlet valve 134 being open.

When the number of times n counted by the controller 131 is equal to the predetermined number of times N (YES in step S36), the controller 131 opens the fuel cell inlet valve 132 and closes the bypass valve 133 at the same time (step S37). That is, only the gas passage A is formed and the fuel gas is introduced continuously to the fuel cell 1. The operation after step S37 is identical to that described in Embodiment 1.

Now, detailed description will be given of how setting is differed between the predetermined time T1, the predetermined time T2 and the predetermined number of times N, depending on the kind of the material gas, which is a feature of the start-up operation of the fuel cell system 130 according to Embodiment 4.

Firstly, description will be given of a case where the material gas is the natural gas.

Regarding the case where the material gas is the natural gas, as described in detail in Embodiment 1, upon the gas passage being switched from the gas passage B to the gas passage A in step S32, the natural gas which is the material gas is purged by the fuel gas, and the flow rate of the purged natural gas is 5Q(L/minutes) which is a sum of 4Q(L/minutes) of hydrogen and Q(L/minutes) of carbon dioxide when the flow rate of the natural gas which is the material gas supplied to the reformer 2 is Q(L/minutes) according to the above formula (1). To perfectly combust the natural gas of 5Q(L/minutes), oxygen of 10Q (L/minutes), i.e., air of 50Q(L/minutes) is necessary as represented by the formula (3) when the air-fuel ratio is 1.

However, the burner 2a is supplied from the combustion air fan 2b with only air of 15Q(L/minutes) satisfying the air-fuel ratio 1.5 with respect to hydrogen of 4Q(L/minutes) generated from the natural gas which is the material gas supplied to the reformer 2 with a flow rate of Q(L/minutes).

To prevent the natural gas of 5Q(L/minutes) from being supplied to the burner 2a continuously, the gas passage is switched from the gas passage A to the gas passage B in step S4 after passage of the predetermined time T1 which is sufficiently short, thereby preventing the natural gas from being supplied to the burner 2a. This is identical to that in the fuel cell system of Embodiment 1.

In addition, the predetermined time T2 which is a period of time that elapses from when the gas passage B is formed until the process returns to step S32, is set to a period of time which passes until an influence of the deviation of the air-fuel ratio which occurred for the predetermined time T1 is eradicated, like the fuel cell system of Embodiment 1.

Furthermore, when the volume of the fuel cell 1 and the passages in the vicinity of the fuel cell 1 is V(L), the predetermined number of times N is set to the number of times with which all of the natural gas filled in the fuel cell 1 and the passages in the vicinity of the fuel cell 1 can be purged and supplied to the burner 2a, like the fuel cell system of Embodiment 1.

Next, description will be given of the case where the material gas is LPG containing propane as major component. To be specific, the anode passage 1a of the fuel cell 1 or the like are preliminarily filled with LPG as replacement gas, before the start-up operation of the fuel cell system 130. It should be noted that LPG actually contains carbon hydride gas such as methane, ethane, or butane, in addition to propane, but it is supposed that LPG is 140% propane, for the sake of convenience.

In the case where the material gas is LPG, the reformer 2 generates hydrogen using LPG and water, according to a chemical reaction expressed as formula (9):

CH₃H₈ + 6H₂O → 3CO₂ + 10H₂ (9)

When the amount of LPG supplied from the material gas supplier 8 to the reformer 2 is Q(L/minutes), the amount of hydrogen exhausted from the fuel processor is 10Q(L/minutes) according to the chemical reaction expressed as the formula (9). Therefore, to perfectly combust hydrogen supplied to the burner 2a with a rate of 10Q(L/minutes), oxygen may be supplied with a rate of 5 Q(L/minutes) according to a formula (10), and air may be supplied with a flow rate of 25Q(L/minutes) in theory when oxygen concentration of air is 20% for the sake of convenience.

10H₂ + 5O₂ → 10H₂O (10)

Like the case where the material gas is the natural gas, when the air-fuel ratio is 1.5, the controller 131 may control the number of rotations (operation amount) of the combustion fan 2b such that air is supplied to the burner 2a with a flow rate of 37.5Q(L/minutes) which is 1.5 times as much as 25Q(L/minutes) corresponding to the air-fuel ratio of 1.

When the fuel cell inlet valve 132 and the fuel cell outlet valve 134 are opened and the bypass valve 133 is closed so that the passage through which the fuel gas supplied from the reformer 2 flows is switched from the gas passage B to the gas passage A, in step S32 shown in Fig. 11, LPG which is the material gas is purged and supplied with a rate of 13Q (L/minutes) which is a sum of 10Q(L/minutes) of hydrogen and 3Q (L/minutes) of carbon dioxide from the fuel cell 1 and the passages in the vicinity of the fuel cell 1.

To perfectly combust LPG of a flow rate of 13Q (L/minutes), oxygen of a flow rate of 65Q(L/minutes), i.e., air of a flow rate of 325Q(L/minutes) is necessary at least as can be seen from a formula (11):

13C₃H₈ + 65O₂ → 39CO₂ + 52H₂O (11)

However, in the fuel cell system 130 of Embodiment 4, in the case where the material gas is LPG, air is supplied to the burner 2a only with a flow rate of 37.5Q (L/minutes) corresponding to the air-fuel ratio of 1.5 with respect to the flow rate Q(L/minutes) of LPG which is the material gas. Because of this, the air-fuel ratio decreases to about 0.1. This is about 1/3 of the air-fuel ratio in the case where the material gas is the natural gas.

In the case where the material gas is LPG, an influence of deviation of the air-fuel ratio in the burner 2a can be suppressed and emission of carbon monoxide can be suppressed, as in the case where the material gas is the natural gas, by setting a predetermined time T1b which is the predetermined time T1 in the case where the material gas is LPG to about 1/3 of a predetermined time T1a which is the predetermined time T1 in the case where the material gas is the natural gas.

When the predetermined time T2 in the case where the material gas is the natural gas is T2a and the predetermined time T2 in the case where the material gas is LPG is T2b, T2a is substantially equal to T2b, because each of T2a and T2b is a period of time which passes until an influence of deviation of the air-fuel ratio is eradicated, which influence is caused by the natural gas or LPG which is the material gas purged from the fuel cell 1 and the passages in the vicinity of the fuel cell 1 and supplied to the burner 2a.

The predetermined number of times N is calculated according to the formula (4) as in the case where the material gas is the natural gas. When the predetermined number of times in the case where the material gas is the natural gas is Na (number of times) and the predetermined number of times in the case where the material gas is LPG is Nb (number of times), Nb (number of times) is about three times as many as Na (number of times).

As described above, the present invention has a technical feature that at least either the predetermined times T1 and T2, or the predetermined number of times N is changed depending on the kind of the replacement gas, i.e., the material gas, filled in the fuel cell 1 and the passages in the vicinity of the fuel cell 1.

This makes it possible to use the existing material gas infrastructure in a place where the fuel cell system is provided, in the fuel cell system having the same configuration, without modifying it. Therefore, an increase of a cost for additionally providing an infrastructure of the material gas and an increase in an initial cost for modifying the fuel cell system into specification according to the infrastructure of the material gas, do not occur.

For example, even if supplying of the natural gas stops temporarily due to an earthquake or the like, in the case where the natural gas is used as the material gas, the fuel cell system can be operated using LPG as the material gas by connecting a LPG gas tank and changing setting of the material gas. Thus, the fuel cell system can be used as electric power supply for emergency cases.

Next, description will be given of the shut-down operation of the fuel cell system 130 according to Embodiment 4. Initially, the controller 131 causes the power generation controller to stop supplying of the electric power to an external power load, and stops the material gas supplier 8 and the blower 3. Thus, the power generation in the fuel cell 1 is stopped. Thereafter, the controller 11 closes both of the material gas valve 7 and the fuel cell outlet valve 134. The controller 131 maintains the open state of the fuel cell inlet valve 132 and the closed state of the bypass valve 133.

The controller 131 operates the combustion air fan 2b for a predetermined period of time after the power generation in the fuel cell 1 stops, thereby cooling the reformer 2 and exhausting uncombusted gas remaining in the burner 2a and passages in the vicinity of the burner 2a to outside the fuel cell system 130.

Thereafter, the controller 131 closes the fuel cell inlet valve 123 at a time point when the temperature of the reformer 2 decreases to a predetermined temperature. As the temperature of the reformer 2 decreases, the temperature of the gas within the reformer 2 decreases, and the volume of the gas decreases, which could possibly cause a negative pressure to be generated within the reformer 2. For this reason, when the temperature of the reformer 2 becomes a temperature which is not higher than the predetermined temperature, the controller 131 opens the material gas valve 7 for a predetermined period of time on a regular basis. Thereby, the material gas is supplied to the reformer 2 and it is possible to prevent the negative pressure from being generated in the reformer 2.

In the fuel cell 1, generation of reaction heat in the fuel cell 1 stops as a result of stop of power generation, and the steam contained in the fuel gas remaining in the fuel cell 1 is cooled and condensed into water, which could possibly cause a negative pressure to be generated within the fuel cell 1. For this reason, the controller 131 opens the fuel cell inlet valve 132 once of plural times the material gas valve 7 is opened, thereby suppressing a negative pressure from being generated inside the fuel cell 1. At this time, the fuel cell outlet valve 134 is kept closed. Therefore, the material gas supplied to the fuel cell 1 or the fuel gas remaining in the fuel cell 1 are not exhausted to outside the fuel cell system 130. As a result, the material gas does not become a waste.

Then, when the temperature of the reformer 2 further decreases, in order to discharge the steam from inside the reformer 2, the controller 131 opens the bypass valve 133 and opens the material gas valve 7 for a predetermined period of time or until the amount of the material gas flowing reaches a predetermined amount, thereby allowing the material gas to flow through the reformer 2. As a result, the gas remaining within the reformer 2 and containing the steam is exhausted to outside the fuel cell system 130 via the burner 2a. At this time, combustion air may be supplied to the burner 2a to combust the gas containing the steam in the burner 2a. In this case, to suppress a negative pressure from being generated within the fuel cell 1, the fuel cell inlet valve 132 may be opened on a regular basis. After the predetermined time elapses from when the operation for discharging the steam from inside the reformer 2 starts, or the supply amount of the material gas reaches a predetermined amount, the controller 131 closes the fuel cell inlet valve 132, the bypass valve 133 and the material gas supply valve 7.

As described above, during the shut-down operation of the fuel cell 1, since the material gas is supplied to the fuel cell 1 on a regular basis with the fuel cell outlet valve 134 being closed, the fuel cell 1 is filled with the material gas. Also, the steam in the fuel gas remaining within the fuel cell 1 is condensed into water, which is left there.

Therefore, at the start-up of the fuel cell 1, when supplying of the fuel gas to the fuel cell 1 starts, the controller 131 controls the fuel cell inlet valve 132 such that the fuel gas is supplied discontinuously to the fuel cell 1. By such control, it is possible to suppress the air-fuel ratio in the burner 2a from getting deviated and combustion from becoming unstable, which would be caused by supplying the material gas remaining in the fuel cell 1 to the burner 2a. In addition, it is possible to suppress occurrence of a misfire in the burner 2a, which would be caused by supplying the condensed water continuously to the burner 2a in the reformer 2.

The combination of the configuration of the fuel cell system and the start-up operation of the fuel cell system, which is described in each of Embodiment 1 to Embodiment 4, is not limited to the above. For example, similar advantages are achieved if the flow of the control of the start-up operation of Fig. 5 is performed in the fuel cell system 130 of Fig. 1 in Embodiment 4. For example, by using a mixer instead of the three-way valve of Embodiment 1 and Embodiment 2 and by adjusting a mixing ratio in the mixer by a controller, the fuel gas is allowed to flow through both of the fuel cell inlet passage R4 and the bypass passage R3, and the amount of the material gas purged from the fuel cell 1 and the passages in the vicinity of the fuel cell 1 can be adjusted by adjusting the ratio between the amount of the fuel gas flowing to the fuel cell 1 and the amount of the fuel gas flowing to the bypass passage R3, thereby suppressing the air-fuel ratio in the burner 2a from getting deviated and imperfect combustion from occurring in the burner 2a.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

A fuel cell system of the present invention is capable of suppressing an air-fuel ratio in a burner from getting deviated when supplying of a fuel gas generated in a fuel processor to a fuel cell starts, in a start-up operation of a fuel cell system in which the fuel cell is filled preliminarily with a material gas, and therefore is useful in fields of the fuel cells.

### Reference Signs Lists

1 fuel cell
1a anode passage
1b cathode passage
2 reformer
2a burner
2b combustion air fan
2c temperature sensor
3 blower
4 hydrogen
4a first heat exchanger
4b second heat exchanger
5 hot water storage tank
6a cooling water pump
6b hot water pump
7 material gas valve
8 material gas supplier
9 three-way valve
10 on-off valve
100 fuel cell system
101 controller
101a determiner means
110 fuel cell system
111 controller
112 on-off valve
113 three-way valve
120 fuel cell system
121 controller
121 a determiner means
122 on-off valve
123 fuel cell inlet valve
124 bypass valve
130 fuel cell system
131 controller
131 a determiner means
132 fuel cell inlet valve
133 bypass valve
134 fuel cell outlet valve
500 reformer
500a combustor
501 fuel cell
502 first gas passage
503 second gas passage
504 third gas passage
505 material gas supplier
507 reformed gas shut-off valve
508 anode off-gas shut-off valve
509 bypass shut-down valve
510 blower

## Claims

1. A fuel cell system comprising:
a fuel cell configured to generate electric power using fuel gas containing hydrogen and oxidizing gas;
a fuel processor configured to reform a material gas to generate the fuel gas;
a burner configured to combust at least one of off-gas containing hydrogen which has not been consumed in power generation in the fuel cell, the material gas and the fuel gas;
a first gas passage connecting the fuel processor to the fuel cell;
a second gas passage connecting the fuel cell to the burner;
a third gas passage connecting the first gas passage to the second gas passage such that the fuel cell is bypassed;
a passage switching means configured to switch a destination of gas flowing through the first gas passage to at least one of the fuel cell and the third gas passage; and
a controller configured to control the passage switching means such that the fuel gas is supplied to the first gas passage discontinuously and the fuel gas is supplied to the third gas passage discontinuously or continuously, when supplying of the fuel gas to the fuel cell starts.

2. The fuel cell system according to Claim 1, wherein the controller is configured to control the passage switching means to switch, predetermined number of times, a state where the fuel gas flows only through the third gas passage for a predetermined period of time and a state where the fuel gas flows only through the first gas passage for a predetermined period of time, when supplying of the fuel gas to the fuel cell starts.

3. The fuel cell system according to Claim 1, wherein the controller is configured to control the passage switching means to switch, predetermined number of times, a state where the fuel gas flows through both the first gas passage and the third gas passage for a predetermined period of time and a state where the fuel gas flows only through the third gas passage for a predetermined period of time, when supplying of the fuel gas to the fuel cell starts.

4. The fuel cell system according to any one of Claims 1 to 3, wherein
wherein the passage switching means is a passage switching valve provided on a branch point where the third gas passage branches from the first gas passage.

5. The fuel cell system according to any one of Claims 1 to 3,
wherein the passage switching means is a passage switching valve provided on a joint point where the third gas passage and the second gas passage are joined together.

6. The fuel cell system according to any one of Claims 1 to 3,
wherein the passage switching means includes a first on-off valve provided on the third gas passage, and a second on-off valve which is provided on a portion of the first gas passage which is downstream of the branch point where the third gas passage branches from the first gas passage and upstream of the fuel cell, or a portion of the second gas passage which is upstream of the joint point where the second gas passage and the third gas passage are joined together, and downstream of the fuel cell.

7. The fuel cell system according to any one of Claims 1 to 3,
wherein the passage switching means includes a first on-off valve provided on the third gas passage, and a second on-off valve which is provided on a portion of the first gas passage which is downstream of the branch point where the third gas passage branches from the first gas passage and upstream of the fuel cell, and a third on-off valve provided on a portion of the second gas passage which is upstream of the joint point where the second gas passage and the third gas passage are joined together and downstream of the fuel cell.

8. The fuel cell system according to any one of Claims 1 to 7, comprising:
a determiner means configured to determine a kind of the material gas;
wherein the controller is configured to change at least one of the predetermined period of time and the predetermined number of times depending on the kind of the material gas determined by the determiner means.
